# EUROPÄISCHE PATENTSCHRIFT

(11) **EP 3 484 299 B1**
(45) Veröffentlichungstag und Bekanntmachung des Hinweises auf die Patenterteilung: **07.10.2020**
(21) Anmeldenummer: 16736876.0
(22) Anmeldetag: 08.07.2016
(51) Int. Cl.: A22B 3/08

(54) **FISCH-SCHLACHTEINRICHTUNG UND DAFÜR EINGERICHTETE TRIGGEREINRICHTUNG**
FISH SLAUGHTER DEVICE AND TRIGGER DEVICE CONFIGURED FOR SAME
DISPOSITIF D'ABATTAGE DES POISSONS ET DISPOSITIF DÉCLENCHEUR CONÇU À CET EFFET

(43) Veröffentlichungstag der Anmeldung: 22.05.2019
(73) Patentinhaber: Nordischer Maschinenbau Rud. Baader GmbH + Co. KG, 23560 Lübeck (DE)
(72) Erfinder: RUSKO, Torsten, 23923 Herrnburg (DE); RUNGE, Dirk, 23568 Lübeck (DE); PAGELS, Mirko, 23564 Lübeck (DE)
(74) Vertreter: Stork Bamberger Patentanwälte PartmbB
(86) Internationale Anmeldenummer: PCT/EP2016/066325
(87) Internationale Veröffentlichungsnummer: WO 2018/006981

(56) Entgegenhaltungen:
- WO-A1-01/97621
- WO-A1-2004/049810
- WO-A1-2016/026540

## Beschreibung

Die Erfindung betrifft eine Fisch-Schlachteinreichung, umfassend einen Fisch-Aufnahmeraum, der durch einen Aufnahmeraumeingang mit zu schlachtenden Fischen in Kopfvoraus-Lage beschickbar ist, und eine Fisch-Positioniereinrichtung, eingerichtet zum steuerbaren Halten und Positionieren eines Fisches in dem Fisch-Aufnahmeraum in einer temporären Stoppposition des Fisches, die wenigstens einem steuerbaren Fisch-Schlachtwerkzeug zum Schlachten des Fisches zugeordnet ist, sowie eingerichtet zur steuerbaren Freigabe des geschlachteten Fisches; die Fisch-Positioniereinrichtung umfasst ein Fischkopf-Anschlagelement, gegen das der Fischkopf des Fisches in der temporären Stoppposition anschlägt, das zudem ein Triggerelement zum Steuern des wenigstens einen steuerbaren Fisch-Schlachtwerkzeugs bildet und mittels einer in Abhängigkeit von der Fischgröße steuerbaren Triggereinrichtung in unterschiedliche, jeweils die temporäre Stoppposition des Fisches bestimmende, Triggerpositionen bewegbar ist, sowie ein Abgabemittel zur Freigabe und Abgabe des bearbeiteten Fisches.

Die Fisch-Schlachteinrichtung umfasst weiterhin das wenigstens eine steuerbare Fisch-Schlachtwerkzeug zum Einwirken auf den Fisch in seiner temporären Stoppposition, eine Trigger-Sensoreinrichtung zum Feststellen des Anschlagens eines Fischkopfes gegen das Fischkopf-Anschlagelement und die steuerbare Triggereinrichtung; diese umfasst das Fischkopf-Anschlagelement, einen stationär angeordneten steuerbaren ersten Stellglied-Aktuator mit einem ersten Stellglied und ein Koppelmittel, das das Fischkopf-Anschlagelement mit dem ersten Stellglied des ersten Stellglied-Aktuators zur damit fischgrößenabhängig steuerbaren Stellbewegung des Fischkopf-Anschlagelements in die Triggerpositionen verbindet.

Die Erfindung bezieht sich auch auf eine Triggereinrichtung, eingerichtet für eine Fisch-Schlachteinrichtung mit wenigstens einem Fisch-Schlachtwerkzeug zum Einwirken auf einen Fischkopf zum Schlachten des Fisches, umfassend ein Chassis, ein an dem Chassis gelagertes Fischkopf-Anschlagelement, das zum Anschlagen des Fischkopfes eines zu schlachtenden Fisches eingerichtet ist und ein durch Anschlagen des Fischkopfes betätigbares Triggerelement bildet, das mit einer Steuerung zum Betätigen eines Fisch-Schlachtwerkzeuges verbindbar ist, einen an dem Chassis angeordneten steuerbaren ersten Stellglied-Aktuator mit einem ersten Stellglied, sowie ein an dem Chassis schiebebewegbar gelagertes Koppelmittel, das das Fischkopf-Anschlagelement schiebebewegbar an dem Chassis lagert und mit dem ersten Stellglied des ersten Stellglied-Aktuators zur damit fischgrößenabhängig steuerbaren Stellbewegung des Fischkopf-Anschlagelements verbindet.

Nach Maßgabe gemessener Fischgröße wird der Fisch-Aufnahmeraum durch die zugehörigen Triggerpositionen an seiner den Fischkopf aufnehmenden Seite verlängert oder verkürzt. Man erreicht damit, dass einheitliche Stellen oder Bereiche der Fische, an denen das oder die Fisch-Schlachtwerkzeuge optimal einwirken können, für jeden Fisch gleichermaßen vor das Fisch-Schlachtwerkzeug gelangen. Diese Maßnahme zielt besonders auch auf die Einhaltung von Vorschriften des Tierschutzes ab.

Eine Fisch-Schlachteinrichtung mit genannten Merkmalen ist aus WO 2016/026540 A1 bekannt. Fische werden der Fisch-Schlachteinrichung einzeln aufeinanderfolgend zugeführt. Die Fische gelangen mit oder in einem Wasserstrom einzeln in Bauchlage und mit Kopf voraus in den Fisch-Aufnahmeraum. Dort befindet sich das gelagerte Fischkopf-Anschlagelement der Triggereinrichtung. Der Fischkopf schlägt unter seinem Eigengewicht gegen das Fischkopf-Anschlagelement an und gelangt dadurch in eine temporäre Stoppposition. Das Fischkopf-Anschlagelement ist schiebebewegbar an einem Basiskörper gelagert und in durch eine Fischgrößensteuerung bestimmter Schiebeposition an dem Basiskörper festsetzbar. Die Schiebeposition wird mittels eines gesteuerten Aktuatormittels eingestellt, das an dem Basiskörper gelagert ist. Ein auf das Anschlagen des Fischkopfes gegen das Fischkopf-Anschlagelement ansprechendes Sensormittel löst den Betrieb von Fisch-Schlachtwerkzeugen aus. Ein erstes Fisch-Schlachtwerkzeug ist ein Betäubungsmittel, nämlich insbesondere ein Schlagbolzen oder dergleichen Betäubungswerkzeug, das auf den Schädel des Fischkopfes trifft und zwischen einer zurückgezogenen Ruheposition und einer ausgefahrenen Betriebsposition, nämlich der Schlagposition, bewegbar ist. Ein zweites Fisch-Schlachtwerkzeug ist ein nach dem Betäuben wirkendes Ausblutungswerkzeug, das zum Beispiel in Form eines Messers zwischen dem Kiemendeckel und dem Kopf oder Körper des Fisches zum Trennen der Hauptarterie einführbar ist. Das Ausblutewerkzeug wird gleichermaßen wie das Betäubungswerkzeug gesteuert und betrieben.

Um angestrebte hohe Durchsatzraten der Fische durch die Fisch-Schlachteinrichtung unter Wahrung von Vorschriften für den Tierschutz zu erzielen, kommt es darauf an, einen möglichst einfach steuerbaren Mechanismus in Verbindung mit einem einfach betreibbaren Aktuatormittel vorzusehen. In einer Einrichtung gemäß WO 2016/026540 A1 stößt eine solche Zielsetzung an Grenzen. Die Verwendung eines einfachen Drucckolbenzylinders, dessen Stellglied sich nur in Endlagen bringen lässt, vereinfacht zwar die Steuerung hinsichtlich größerer Durchsatzgeschwindigkeit, doch die größenabhängige Einstellung des Fischkopf-Anschlagelements bleibt insbesondere auch hinsichtlich einer tierschutzgerechten Bearbeitung eingeschränkt. Der das Aktuatormittel lagernde Basiskörper ist ein Bestandteil des Sensormittels, derart, dass das Fischkopf-Anschlagelement in einer eingestellten, an dem Basiskörper festgesetzten Triggerposition gemeinsam mit dem Basiskörper mittels des Sensormittels den Betrieb der Fisch-Schlachtwerkzeuge auslöst. Es ist eine relativ hohe Anschlagkraft des Fischkopfes gegen das Fischkopf-Anschlagelement zum Triggern erforderlich. Es resultieren Störanfälligkeit sowie auch eine Beeinträchtigung der Fisch-Durchsatzrate. Der Basiskörper benötigt als Bestandteil des Sensormittels besonderen Bau- und Betriebsraum. Gemäß WO 2016/026540 A1 ist daher zusätzlich ein Druckkolbenzylinder eingerichtet, mit dem das Fischkopf-Anschlagelement zum Freistellen des Fischkopfes vor der Triggereinrichtung wegschwenkbar ist.

Der Erfindung liegen die Ziele zugrunde, hinsichtlich großer Fischdurchsatzrate, tierschutzrechtlichen Bestimmungen genügender Bearbeitung und Vermeidung von Störanfälligkeit des Betriebs die Triggereinrichtung sowie die Fisch-Schlachteinrichtung bau- und funktionstechnisch zu verbessern und relativ einfach zu gestalten.

Die Ziele werden in Verbindung mit den Merkmalen der eingangs genannten Fisch-Schlachteinrichtung dadurch erreicht, dass die Triggereinrichtung einen zum fischgrößenabhängigen Einstellen von wenigstens zwei Triggerpositionen eingerichteten, stationär angeordneten steuerbaren zweiten Stellglied-Aktuator mit einem zweiten Stellglied umfasst, wobei das zweite Stellglied steuerbar in wenigstens zwei feste Trigger-Einstellpositionen des zweiten Stellglieds setzbar ist, und dass die beiden Stellglieder, das heißt das erste Stellglied und das zweite Stellglied, derart koppelbar angeordnet sind, dass eine Stellbewegung des ersten Stellgliedes durch einen Koppelanschlag gegen das in eine seiner festen Trigger-Einstellpositionen gesetzte zweite Stellglied gestoppt und dadurch eine genannte Triggerposition des Fischkopf-Anschlagelements zugehörig zu der gesetzten festen Trigger-Einstellposition des zweiten Stellgliedes bewirkt wird.

Die Ziele werden entsprechend mit der eingangs genannten Triggereinrichtung dadurch erreicht, dass die Triggereinrichtung einen zum fischgrößenabhängigen Einstellen von wenigstens zwei Triggerpositionen eingerichteten, an dem Chassis angeordneten steuerbaren zweiten Stellglied-Aktuator mit einem zweiten Stellglied umfasst, wobei das zweite Stellglied steuerbar in wenigstens zwei feste Trigger-Einstellpositionen des zweiten Stellglieds setzbar ist, und dass die beiden Stellglieder, das heißt das erste Stellglied und das zweite Stellglied, derart koppelbar angeordnet sind, dass eine Stellbewegung des ersten Stellgliedes durch einen Koppelanschlag gegen das in eine seiner festen Trigger-Einstellpositionen gesetzte zweite Stellglied gestoppt und dadurch eine genannte Triggerposition des Fischkopf-Anschlagelements zugehörig zu der gesetzten festen Trigger-Einstellposition des zweiten Stellgliedes bewirkt wird.

Man erreicht eine Reihe von Vorteilen. Erfindungsgemäß wirkt das zweite Stellglied des zweiten steuerbaren Stellglied-Aktuators auf das erste Stellglied des ersten steuerbaren Stellglied-Aktuators ein, derart, dass sie gemeinsam fischgrößenabhängig Stellpositionen des ersten Stellglied-Aktuators und entsprechend Triggerpositionen des das Triggerelement bildenden Fischkopf-Anschlagelements bestimmen. Der zweite Stellglied-Aktuator wirkt steuerbar auf das Koppelmittel ein, das das Fischkopf-Anschlagelement mit dem ersten Stellglied des ersten Stellglied-Aktuators verbindet. Zudem stellt das Koppelmittel die Kopplung bzw. die Koppelbarkeit zwischen den beiden Stellgliedern her. Die Einwirkung ist derart, dass der erste Stellglied-Aktuator mit dem ersten Stellglied gegen die festen Trigger-Einstellpositionen, nämlich feste Stopppositionen des zweiten Stellgliedes arbeitet und so jeweils in einem Stoppzustand gehalten wird, der einer der festen Trigger-Einstellpositionen des zweiten Stellgliedes entspricht und die zugehörige Triggerposition des Fischkopf-Anschlagelements bestimmt. Es ist gefunden worden, dass vorzugsweise drei, aber gegebenenfalls auch mehr fischgrößenabhängige Triggerpositionen, die durch wenigstens drei feste Trigger-Einstellpositionen einstellbar sind, einen ausreichend positionsgenauen sowie den Fischdurchsatz verbessernden Betrieb bewirken. Erfindungsgemäß reicht die fischgrößenabhängige Steuerbarkeit in vorzugsweise drei temporäre Stopppositionen des Fisches aus, um die Lage des Fischkopfes in Bezug auf ein oder jedes Fisch-Schlachtwerkzeug in Abhängigkeit von Schwankungen der Fischgrößen einzurichten. So lassen sich schwankende Fischgrößen von in Reihe automatisch und kontinuierlich zu schlachtenden Fischen optimal drei Fischgrößenbereichen zuordnen, wobei die Steuerung derart eingerichtet ist, dass zu jedem Fischgrößenbereich eine zu bewirkende temporäre Fisch-Stoppposition gehört. Man erzielt erfindungsgemäß einen tierschutzgerechten, Betriebsstörungen vermeidenden und dennoch großen Fischdurchsatz zulassenden Schlachtbetrieb.

Erfindungsgemäß arbeiten der erste Stellglied-Aktuator und der zweite Stellglied-Aktuator in der Weise zusammen, dass der zweite Stellglied-Aktuator ein Master-Aktuator und der erste Stellglied-Aktuator ein Slave-Aktuator ist, wobei der zweite Stellglied-Aktuator dem ersten Stellglied-Aktuator wenigstens zwei die Triggerpositionen bestimmende Stellpositionen aufzwingt. Um vorzugsweise zwei feste Trigger-Einstellpositionen zu bewirken, muss der zweite Stellglied-Aktuator nur in zwei entsprechende bistabile Stellpositionen, zweckmäßig Endpositionen eines Pneumatikzylinders, verfahrbar sein. Solche Endpositionen lassen sich steuerungstechnisch mit hoher Geschwindigkeit präzise anfahren. Auch befindet sich der zweite Stellglied-Aktuator in solchen Endzuständen, nämlich einer Anfangsstellung und einer Endstellung, in besonders stabilen und damit genau reproduzierbaren, unter Anschlagkraft auch hochbelastbaren Zuständen. Vorteilhaft wird ein Koppelmittel, das das erste Stellglied und das zweite Stellglied miteinander koppelt, zugfest mit dem ersten Stellglied verbunden.

Erfindungsgemäß lässt sich in Kombination mit den steuerbaren temporären Stopppositionen des Fisches eine diese Positionierung fischgrößenabhängig unterstützende Zentrierung des Fisches in dem Fisch-Aufnahmeraum einrichten. Die gesteuerte Zentrierung erlaubt optimale (größtmögliche) Fisch-Größenbereiche für jede Triggerposition. Die Zentrierung hat auch unabhängig von der Gestaltung der Triggereinrichtung erfinderische Bedeutung. Eine Gestaltung besteht darin, dass die Fisch-Positioniereinrichtung zum Zentrieren des Fisches in einer temporären Stoppposition wenigstens ein Paar Flankenklappen umfasst, die den Fisch-Aufnahmeraum seitlich begrenzen, und dass die beiden Flankenklappen des Paares in einer definierten Grundposition, in der jeder Fisch zwischen die beiden Flankenklappen gelangt, mittels einer von einer Einrichtungs-Steuereinrichtung gesteuerten Druckkraftsteuerung mit von der Fischgröße abhängiger Druckkraft beaufschlagbar sind, derart, dass die beiden Flankenklappen in der stationären Grundposition zum Ausüben der Druckkraft vorgespannt werden, so dass sie mittels des Fisches gegen die Druckkraft entsprechend fischgrößenabhängig verdrängbar sind. Insbesondere kann die Zentrierung auch unabhängig von der Größenbereichssteuerung, das heißt von der Größen-Stufensteuerung der Triggereinrichtung, eingerichtet werden. Für einen Fisch mit kleiner Breite ist die Vorspannungs-Druckkraft geringer als für einen Fisch mit größerer Breite. Die von einem passierenden Fisch auf die Flankenklappen auszuübende Verdrängungskraft, die der zu überwindenden Druckkraft entspricht, ist mittels der Steuerung bereits fischgrößenabhängig eingestellt, bevor der Fisch die zentrierenden Flankenklappen erreicht.

Die erfindungsgemäße fischgrößenabhängig steuerbare Fisch-Schlachteinrichtung wird insbesondere dadurch vervollkommnet, dass sie eine Einrichtungs-Steuereinrichtung umfasst, die zur fischgrößenabhängigen Betriebssteuerung mit einer Fischgrößen-Erfassungseinrichtung, mit den steuerbaren Stellglied-Aktuatoren der Triggereinrichtung, mit der Trigger-Sensoreinrichtung, mit dem wenigstens einen steuerbaren Fisch-Schlachtwerkzeug und mit dem steuerbaren Abgabemittel steuerungstechnisch verbunden ist. Im Falle der Ausführung mit den zentrierenden Flankenklappen ist die Einrichtungs-Steuereinrichtung auch mit einem Zentrier-Aktuator verbunden, der die Druck-Vorspannung der Flankenklappen steuert. Zweckmäßig wird in die Fisch-Schlachteinrichtung eine die Fischgröße erfassende Fischgrößen-Erfassungseinrichtung zum Erzeugen fischgrößenabhängiger Steuersignale integriert, die eine Einrichtungs-Steuereinrichtung beaufschlagen.

Eine besondere Gestaltung besteht darin, dass die Fisch-Schlachteinrichtung ein stationäres Gehäuseteil, ein ein Montagegestell oder einen Basiskörper der Triggereinrichtung bildendes Chassis und eine Arretiereinrichtung aufweist, mit der das Chassis zum Voreinstellen eines Einstellabstandes des Fischkopf-Anschlagelements von dem Aufnahmeraumeingang an dem Gehäuseteil einstellbar festsetzbar ist. Diese Maßnahme verbessert die Handhabbarkeit der erfindungsgemäßen Fisch-Schlachteinrichtung hinsichtlich einer einfachen und verfeinerten Einstellung. Mittels der Arretiereinrichtung ist eine insbesondere manuelle Voreinstellung möglich, die den Betrieb auf einfache Weise zum Beispiel an eine Spezies von Fischen anpasst. Das heißt, dass die Betriebssteuerung in Kombination mit der Voreinstellung einfach gehalten wird, indem die automatische Betriebssteuerung auf die Bereichssteuerung zum Triggern begrenzt bleibt.

Bau- und Funktionseinheiten der Triggereinrichtung lassen sich zu einer insbesondere selbständig als Einbaueinrichtung handhabbaren Triggereinrichtung zusammenfassen. Eine solche Triggereinrichtung, eingerichtet für eine Fisch-Schlachteinrichtung mit wenigstens einem Fisch-Schlachtwerkzeug zum Einwirken auf den Fischkopf zum Schlachten des Fisches, insbesondere für eine Fisch-Schlachteinrichtung nach einem der Schutzansprüche für die Fisch-Schlachteinrichtung, umfasst ein einen Basiskörper bildendes Chassis, ein an dem Chassis gelagertes Fischkopf-Anschlagelement, das zum Anschlagen des Fischkopfes eines zu schlachtenden Fisches eingerichtet ist und ein durch Anschlagen des Fischkopfes betätigbares Triggerelement bildet, das mit einer Steuerung zum Betätigen eines Fisch-Schlachtwerkzeuges verbindbar ist, einen an dem Chassis angeordneten steuerbaren ersten Stellglied-Aktuator mit einem ersten Stellglied, sowie ein an dem Chassis schiebebewegbar gelagertes Koppelmittel, das das Fischkopf-Anschlagelement schiebebewegbar an dem Chassis lagert und mit dem ersten Stellglied des ersten Stellglied-Aktuators zur damit fischgrößenabhängig steuerbaren Stellbewegung des Fischkopf-Anschlagelements verbindet.

Die Triggereinrichtung ist erfindungsgemäß dadurch eingerichtet, dass die Triggereinrichtung einen zum fischgrößenabhängigen Einstellen von wenigstens zwei Triggerpositionen eingerichteten, an dem Chassis angeordneten steuerbaren zweiten Stellglied-Aktuator mit einem zweiten Stellglied umfasst, wobei das zweite Stellglied steuerbar in wenigstens zwei feste Trigger-Einstellpositionen des zweiten Stellglieds setzbar ist, und dass die beiden Stellglieder, das heißt das erste Stellglied und das zweite Stellglied, derart koppelbar angeordnet sind, dass eine Stellbewegung des ersten Stellgliedes durch einen Koppelanschlag gegen das in eine seiner festen Trigger-Einstellpositionen gesetzte zweite Stellglied gestoppt und dadurch eine genannte Triggerposition des Fischkopf-Anschlagelements zugehörig zu der gesetzten festen Trigger-Einstellposition des zweiten Stellgliedes bewirkt wird.

Man erreicht mit der insbesondere als Montage- oder Einbauteil eingerichteten Triggereinrichtung eine besonders einfache Konstruktion der Fisch-Schlachteinrichtung, wobei sich diese besonders einfach, zweckmäßig mit drei wesentlichen Baugruppen, zusammensetzen lässt. Eine erste Baugruppe besteht dann in einem Einrichtungs-Unterteil, das den Fisch-Aufnahmeraum zusammen mit zugehörigen Aggregaten wie Führungen, Klappen, Antrieben und vorteilhaft auch einem Ausblutewerkzeug aufweist. Ein zweites Bauteil ist ein Oberteil mit daran angeordnetem Fisch-Schlachtwerkzeug, nämlich dem Betäubungswerkzeug. Ein drittes Bauteil wird durch die Triggereinrichtung gebildet, die an dem oberen Bauteil angeordnet wird und insoweit mit dem oberen Bauteil auch eine Baueinheit bildet. Auch diese dreiteilige Bauweise und -form hat selbständige erfinderische Bedeutung.

Gestaltungen der Triggereinrichtung sowohl in einer Ausführung als selbständig handhabbare Montage- und Baueinrichtung, als auch als Einrichtung, deren Bau- und Funktionsteile zusammengehörige Bestandteile der Fisch-Schlachteinrichtung bilden, werden im Folgenden hervorgehoben.

Eine Gestaltung der Triggereinrichtung besteht darin, dass das erste Stellglied des ersten Stellglied-Aktuators mit maximaler Stellverlagerung in eine feste Trigger-Einstellposition des ersten Stellglieds bewegbar ist, die durch eine maximale Stellverlagerung des ersten Stellgliedes bestimmt ist und zugehörig eine Triggerposition des Fischkopf-Anschlagelements bewirkt, und dass weitere Triggerpositionen des Fischkopf-Anschlagelements durch die festen Trigger-Einstellpositionen des zweiten Stellgliedes bestimmt sind. Eine besonders einfache, jedoch zur fischgrößenabhängigen Steuerung optimale Ausführungsform besteht darin, dass der zweite Stellglied-Aktuator ein bistabiler Aktuator ist, dessen zweites Stellglied in nur zwei feste Trigger-Einstellpositionen des zweiten Stellgliedes setzbar ist, die zwei zugehörige Triggerpositionen des Fischkopf-Anschlagelements bestimmen. Der bistabile Stellglied-Aktuator kann funktionstechnisch besonders einfach ein steuerbarer, vorteilhaft doppelwirkender Pneumatikzylinder sein. Auch für den ersten Stellglied-Aktuator wird vorteilhaft ein bistabiler Aktuator, zweckmäßig ein steuerbarer, vorzugsweise doppelwirkender Pneumatikzylinder verwendet.

Eine bevorzugte Gestaltung besteht darin, dass das Chassis eine Chassisvorderseite und einen vorderen Chassisabschnitt sowie eine Chassisrückseite und einen rückwärtigen Chassisabschnitt aufweist, wobei das Fischkopf-Anschlagelement in dem vorderen Chassisabschnitt mit einer an der Chassisvorderseite zum Anschlagen des Fischkopfes freien Fischkopf-Anschlagfläche angeordnet ist. Eine für die Zwecke der Erfindung besonders geeignete Konstruktion besteht dann darin, dass das Fischkopf-Anschlagelement, zugehörig zu den festen Trigger-Einstellpositionen, in eine von der Chassisvorderseite am weitesten entfernt gelegene rückwärtige Triggerposition verlagerbar ist, wobei wenigstens eine der zu dem zweiten Stellglied-Aktuator gehörenden Triggerpositionen von der rückwärtigen Triggerposition zur Chassisvorderseite hin distanziert ist. Auf einfache Weise erreicht man insbesondere, dass, zugehörig zu den festen Trigger-Einstellpositionen, eine vordere Triggerposition zum Anschlagen von Fischköpfen kleiner Größe, wenigstens eine mittlere Triggerposition zwischen der vorderen und der rückwärtigen Triggerposition zum Anschlagen von Fischköpfen mittlerer Größe und die rückwärtige Triggerposition zum Anschlagen von Fischköpfen großer Größe einstellbar sind. Gegebenenfalls kann auch eine Ausfahrposition des zweiten Stellgliedes aus dem zweiten Stellglied-Aktuator eine zu der rückwärtigen Triggerposition gehörende feste Trigger-Einstellposition sein.

Eine bevorzugte Gestaltung des Koppelmittels besteht darin, dass das Koppelmittel eine an dem Chassis schiebebewegbar gelagerte Koppelstange, ein die Koppelstange an das erste Stellglied anschließendes erstes Koppelelement und ein an der Koppelstange festgesetztes zweites Koppelelement aufweist, das den Koppelanschlag gegen das zweite Stellglied herstellt, wenn sich dieses in einer der einstellbaren festen Trigger-Einstellposition befindet. Eine besonders kompakte Bauform erreicht man dann dadurch, dass die beiden Stellglied-Aktuatoren, nämlich der erste Stellglied-Aktuator und der zweite Stellglied-Aktuator, an dem Chassis parallel nebeneinander angeordnet sind, wobei sich die beiden Stellglieder an dem rückwärtigen Chassisabschnitt erstrecken, und dass das Koppelmittel parallel neben den beiden Stellglied-Aktuatoren angeordnet ist.

Die erfindungsgemäße Triggereinrichtung ermöglicht in besonderer Weise mit weitgehend reduziertem, geringem Auslöseweg sowie mit optimal reduzierter Masse eines Triggerelements, das als solches präzise und empfindlich ansprechbar arbeitet, eine besonders einfache, funktionszuverlässige Trigger-Sensoreinrichtung. Diese reagiert bereits, wenn der Fisch mit geringem Anschlagimpuls gegen das Fischkopf-Anschlagelement gelangt. Man erreicht die Vorteile insbesondere damit, dass an dem Koppelmittel der Triggereinrichtung eine mit dem Fischkopf-Anschlagelement verlagerbare Trigger-Sensoreinrichtung zum Registrieren des Anschlagens eines Fischkopfes gegen das Fischkopf-Anschlagelement angeordnet ist, wobei das Fischkopf-Anschlagelement unmittelbar einen Bestandteil der Sensoreinrichtung bildet. Zweckmäßig ist das Fischkopf-Anschlagelement zum Registrieren des Anschlagens eines Fischkopfes gegen das Fischkopf-Anschlagelement, gegen Rückstellkraft begrenzt ausweichbar, an dem Koppelmittel, vorzugsweise schwenkbar, gelagert. Das Chassis der Triggereinrichtung weist Verbindungselemente auf, zum Beispiel Befestigungslaschen, Befestigungslöcher oder Stifte, vorzugsweise als Arretierstifte, mittels derer es ortsfest an einem Gehäuse einer Fisch-Schlachteinrichtung festsetzbar ist.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als unabhängiges Detailbeispiel für andere nicht oder nicht vollständig beschriebene, unter die Erfindung fallende Ausführungen und Gestaltungen zu verstehen. Insbesondere werden Gestaltungen oder Merkmale, die übergeordnete selbstständige Relevanz haben, mit der Angabe "allgemein" hervorgehoben.

Es zeigen
- Fig. 1: in schematischer Längsansicht eine Fisch-Schlachteinrichtung, die mit einer Fisch-Zuführeinrichtung, einer Fischgrößen-Erfassungseinrichtung sowie einer Einrichtungs-Steuereinrichtung eingerichtet ist und zwei FischSchlachtwerkzeuge aufweist, nämlich ein Betäubungswerkzeug sowie ein Ausblutungswerkzeug,
- Fig. 2: in axonometrischer Darstellung eine drei Baugruppen aufweisende erfindungsgemäße Fisch-Schlachteinrichtung mit einer eines der Bauteile bildenden erfindungsgemäßen Triggereinrichtung,
- Fig. 3: in axonometrischer Darstellung eine Vorderansicht der Fisch-Schlachteinrichtung gemäß Fig. 2,
- Fig. 4: in axonometrischer Darstellung eine Draufsicht auf die Fisch-Schlachteinrichtung gemäß Fig. 2 mit Draufsicht auf die Triggereinrichtung,
- Fig. 5 und 6: in axonometrischer Darstellung Schrägansichten einer erfindungsgemäßen Triggereinrichtung in einer ersten festen Trigger-Einstellposition sowie in einer zweiten festen Trigger-Einstellposition eines zweiten Stellgliedes der Triggereinrichtung und
- Fig. 7A bis 7C: in Draufsicht die Triggereinrichtung gemäß Fig. 5 und 6 in drei gestuften Einstellpositionen, nämlich in einer maximalen, einer mittleren und einer minimalen Einstellposition.

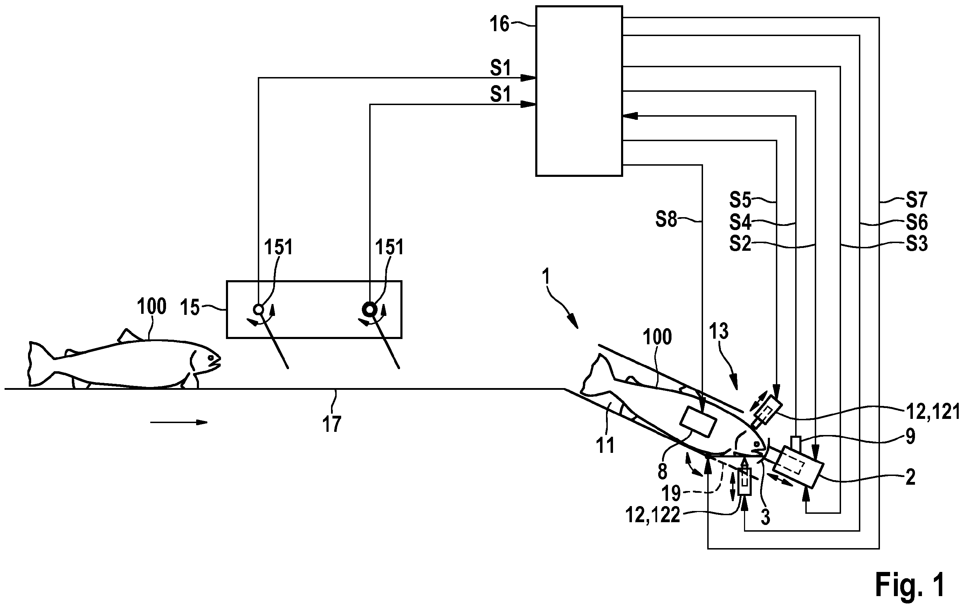

Fig. 1 zeigt in schematischer Darstellung eine erfindungsgemäße Fisch-Schlachteinrichtung 1 in Verbindung mit zugehörigen Betriebseinrichtungen, nämlich einer Fisch-Zuführeinrichtung 17, einer Fischgrößen-Erfassungseinrichtung 15, einer Einrichtungs-Steuereinrichtung 16 und einer erfindungsgemäßen steuerbaren Triggereinrichtung 2.

Die Fisch-Schlachteinrichtung 1 umfasst einen Fisch-Aufnahmeraum 11, eine Fisch-Positioniereinrichtung 13, eine Trigger-Sensoreinrichtung 9, die steuerbare Triggereinrichtung 2 und steuerbare Fisch-Schlachtwerkzeuge 12. Ein erstes Fisch-Schlachtwerkzeug 12 ist ein Betäubungswerkzeug 121, das im Kopfbereich des Fisches 100 mechanisch auf den Schädel einwirkt. Ein zweites Fisch-Schlachtwerkzeug 12 ist ein Ausblutungswerkzeug 122, das der Fischunterseite im Bereich zwischen Kopf und Kiemen zum Durchtrennen der Hauptarterie zugeordnet ist.

Die Fisch-Positioniereinrichtung 13 weist ein Fischkopf-Anschlagelement 3 und ein durch eine schwenkbare Bodenklappe 19 gebildetes Abgabemittel zur Freigabe und Abgabe eines bearbeiteten Fisches 100 auf. Die Fisch-Positioniereinrichtung 13 umfasst auch ein Flankenklappen-Paar 8 zum Zentrieren des Fisches 100 in einer Bearbeitungsposition innerhalb des Fisch-Aufnahmeraums 11.

Die Fisch-Zuführeinrichtung 17, zum Beispiel in Form eines mit Wasser befüllten Bassins oder eines wasserführenden Kanals, ist derart angeordnet und eingerichtet, dass zu schlachtende Fische 100 in Bauchlage und kopfvoraus dem Fisch-Aufnahmeraum 11 zugeführt werden. Die Fischgrößen-Erfassungseinrichtung 15 ist eingerichtet und angeordnet, um die Größe und gegebenenfalls explizit die Dicke eines die Fisch-Zuführeinrichtung 17 passierenden Fisches 100 zur Betriebsteuerung zu erfassen.

Die Einrichtungs-Steuereinrichtung 16 ist zum Steuern eines automatischen Schlachtbetriebs mit der Triggereinrichtung 2, der Trigger-Sensoreinrichtung 9, den Fisch-Schlachtwerkzeugen 12, dem Abgabemittel und dem Flankenklappenpaar 8 verbunden. Aus Fig. 1 sind Signalwege S1 bis S8 ersichtlich. Derartige Signalwege können durch jede Mess- oder Steuersignale übertragende Signal- oder Steuerstrecke wie zum Beispiel Leitungen oder auch drahtlose Wirkverbindungen, gegebenenfalls einschließlich Steuerschaltungen oder -geräte, gebildet sein.

Im Ausführungsbeispiel gemäß Fig. 1 ist die Fischgrößen-Erfassungseinrichtung 15 mit Winkelkodierern 151 ausgestattet, die die Größe des Fisches, z. B. seine Länge und gegebenenfalls explizit die Dicke, erfassen und in einen geeigneten Steuerwert umsetzten. Die Fischgrößen-Erfassungseinrichtung 15 kann durch jede zum Messen von Fischen geeignete Einrichtung gebildet werden. Zum Beispiel kann der Fisch gewogen werden. Die Fischgrößen-Erfassungseinrichtung 15 ist stromaufwärts des Fisch-Aufnahmeraums 11 angeordnet. Sie wird, wie bekannt, mit einer nicht dargestellten Wegverfolgung verknüpft, um den erfassten Fisch-Größenwert jeweils dem zugehörigen, in den Fischaufnahmeraum 11 gelangenden Fisch 100 zuzuordnen. Auch wird zweckmäßig stromaufwärts der Erfassungseinrichtung 15 eine nicht dargestellte Überwachungseinrichtung angeordnet, mit der sichergestellt wird, dass die Fische 100 vereinzelt zugeführt werden, sodass sie mit Abstand aufeinanderfolgen.

Die Einrichtungs-Steuereinrichtung 16 ist mit an sich üblichen Komponenten einer Computereinrichtung und einer elektronischen Steuerung, gegebenenfalls in Verbindung mit Steuerschaltungen wie Pneumatik-Steuerschaltungen in den Signalwegen, derart eingerichtet, dass sämtliche Einrichtungen und Mittel unmittelbar betätigt und nach ihrer Betätigung in den Ausgangszustand zurückgesetzt werden, sodass der Fisch-Aufnahmeraum 11 zur Aufnahme und Bearbeitung des nächsten Fisches 100 bereit ist. Vorteilhaft wird die Einrichtungs-Steuereinrichtung 16 mit einer programmierbaren Logik (PLC) ausgestattet. Insbesondere wird die Fisch-Größenerfassung und die Steuerung für unterschiedliche Fischarten und/oder in Anpassung auf Charakteristika von Körpergeometrie und/oder Gewicht programmiert.

Mit der Fischgrößen-Erfassungseinrichtung 15 und von gegebenenfalls weiteren Einrichtungen zum Lenken und Verfolgen des Fisches gewonnene Signale werden über die Steuerwege S1 an die Einrichtungs-Steuereinrichtung 16 gegeben. Die Triggereinrichtung 2 wird über die Signalwege S2, S3 mit Steuersignalen beaufschlagt. Über den Signalweg S4 wird ein von der Trigger-Sensoreinrichtung 9 gewonnenes Steuersignal, das in der Bearbeitungsposition den Anschlag des Fischkopfes gegen das Fischkopf-Anschlagelement 3 registriert, an die Einrichtungs-Steuereinrichtung 16 übertragen. Über die Signalwege S5 und S6 werden die Fisch-Schlachtwerkzeuge 12 aktiviert.

Über den Signalweg S7 wird das Abgabemittel gesteuert, und über den Signalweg S8 erfolgt die Steuerung des Flankenklappen-Paares 8.

Mittels der Fisch-Positioniereinrichtung 13 gelangt der Fisch 100 in dem Fisch-Aufnahmeraum 11 in unterschiedliche definierte Bearbeitungspositionen, die zugleich Triggerpositionen sind und jeweils durch eine gesteuerte temporäre Stoppposition des Fisches 100 bestimmt sind. Das Fischkopf-Anschlagelement 3 ist nach Maßgabe der Fischgröße in unterschiedliche Triggerpositionen bewegbar.

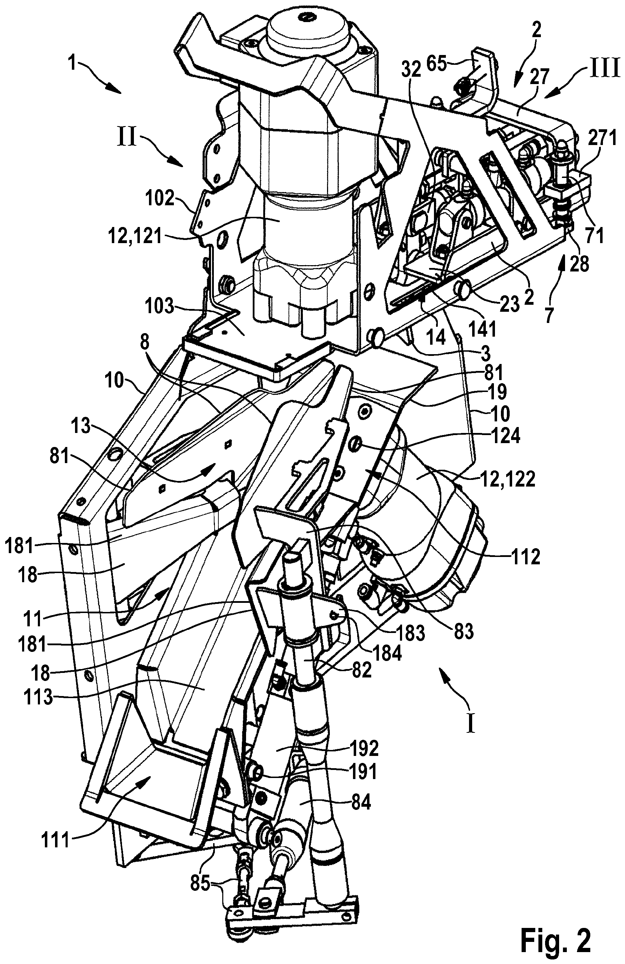

Die Triggereinrichtung 2 ist erfindungsgemäß in besonderer Weise gestaltet und steuerbar, wie dies nachstehend beschrieben wird. Eine erfindungsgemäße Fisch-Schlachteinrichtung 1 wird, im Ausführungsbeispiel, zunächst anhand der Figuren 2 bis 4 näher beschrieben. Die Fisch-Schlachteinrichtung 1 gemäß Fig. 2 bis 4 weist im Wesentlichen drei aneinandergesetzte Baugruppen I, II und III auf.

Die Baugruppe I ist ein Einrichtungs-Unterteil, das den Fisch-Aufnahmeraum 11 mit einem Aufnahmeraumeingang 111 und einem Aufnahmeraumausgang 112 ausbildet. Ein Boden 113 des Fisch-Aufnahmeraums 11 ist durch die Bodenklappe 19 gebildet, die eingangsseitig mittels eines Schwenklagers 191 angelenkt ist, derart, dass sie, das Abgabemittel bildend, in geschlossener, hochgeschwenkter Position einen Fisch in dem Fisch-Aufnahmeraum 11 hält, während sie nach unten in eine geöffnete Position verschwenkbar ist, in der ein geschlachteter Fisch am Aufnahmeraumausgang 112 aus dem Fisch-Aufnahmeraum 11 freigegeben wird. Schließ- und Öffnungsstellung der Bodenklappe 19 werden mittels Bodenklappen-Aktuatoren 192, 193 bewirkt, die über den Signalweg S7 ansteuerbar sind. Zweckmäßig werden Pneumatikzylinder verwendet, die im Signalweg S7 an eine gesteuerte Druckluftversorgung angeschlossen sind.

Der Fisch-Aufnahmeraum 11 ist in einem mittleren Bereich und einem hinteren Bereich, in dem der Fischkopf zu liegen kommt, seitlich mit dem Flankenklappen-Paar 8 begrenzt. Zwischen den Flankenklappen 81 wird der Fisch zum Bearbeiten zentriert. Diese Zentrierung erfolgt gesteuert. Jede Flankenklappe 81 ist mittels einer Aufhängung 83 gehalten, die eingangsseitig des Flankenklappen-Paares am oberen Ende einer vertikal gerichteten Welle 82 befestigt ist. Die Flankenklappen 81 sind mittels der synchron gesteuerten Wellen 82 aufeinander zu und voneinander weg schwenkbar.

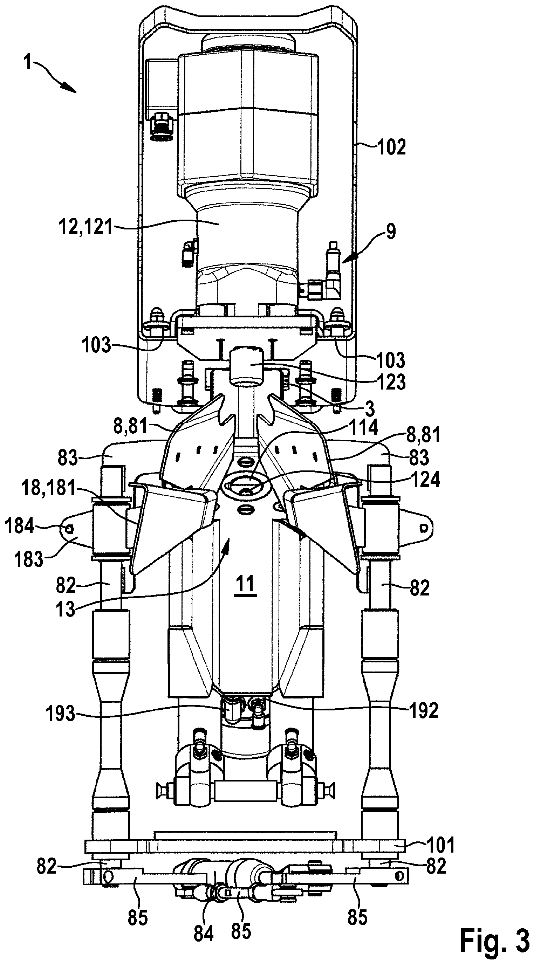

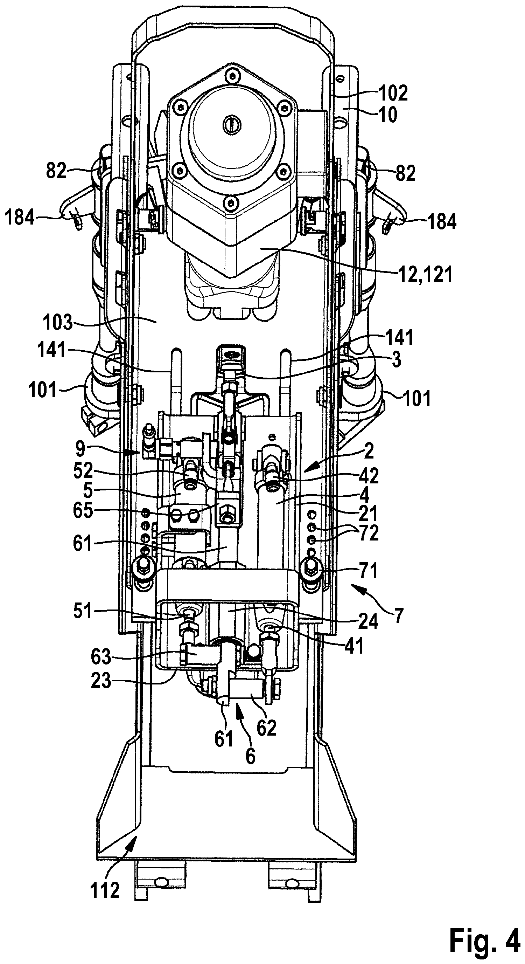

Wie aus Fig. 3 und 4 ersichtlich, sind Wellenlager der Wellen 82 an Lagerkonsolen 101 befestigt. Der synchrone Betrieb der Flankenklappen 81 wird mittels eines die Wellen 82 anlenkenden Synchronisiergestänges 85 bewirkt. Das Synchronisiergestänge 85 ist an einen Flankenklappen-Aktuator 84 angeschlossen, zum Beispiel einen Pneumatikzylinder, der über den Signalweg S8 in Verbindung mit gesteuerter Druckluftversorgung betrieben wird. Der Flankenklappen-Aktuator 84 ist an dem Einrichtungs-Unterteil angeordnet. In einer Ausgangsstellung befinden sich die Flankenklappen 81 in engstem definiertem V-förmigem Abstand. In dieser Position sind die Flankenklappen 81 mittels gesteuerter Hubkraft des Flankenklappen-Aktuators 84, die zum Beispiel mit Proportionalventilen gesteuert wird, mit Druckkraft vorgespannt und gegen diese Druckkraft durch Verdrängung mittels eines zwischen die Flankenklappen 81 gelangenden Fisches durch Aufschwenken in Abhängigkeit von der Fischdicke voneinander distanzierbar. Die fischgrößenabhängig gesteuerte Druckkraft des Flankenklappen-Aktuators 84 bestimmt die Größe der Vorspannung. Kleinere bzw. weniger dicke Fische werden mit geringerer Vorspannung als größere bzw. dickere Fische zentriert. Die Druckluft-Vorspannung kann in Abhängigkeit von der Fischgröße kontinuierlich und/ oder, abhängig von Fisch-Größenbereichen, gestuft gesteuert werden. Insbesondere kann allgemein die Dicke der Fische als ein Fischgrößenwert zum Steuern der Flankenklappen 81 direkt gemessen werden.

Im Bereich der Kopflage eines Fisches in dem Fisch-Aufnahmeraum 11 ist an dem Aufnahmeraumboden 113 unterseitig das Ausblutungswerkzeug 122 angeordnet, das ein Stichelmesser 124 aufweist, das zum Einwirken auf einen zu schlachtenden Fisch durch ein Stichelloch 114 im Aufnahmeraumboden 113 hindurchtritt. Das Ausblutungswerkzeug 122 ist über den Signalweg S6 steuerbar. Zweckmäßig wird es mit einem Pneumatikzylinder über eine gesteuerte Luftversorgung im Signalweg S6 betrieben.

Im eingangsseitigen Bereich des Fisch-Aufnahmeraums 11 ist ein Eingangs-Klappenpaar 18 angeordnet, das, teilweise überlappend, dem Flankenklappenpaar 8 vorgeordnet ist. Die zugehörigen Eingangsklappen 181, die an beiden Seiten des Fisch-Aufnahmeraums 11 spiegelbildlich gleich angeordnet sind, sind jeweils an einer Aufhängung 183 befestigt und mittels dieser an ihren eingangsseitigen Enden um die Wellen 82 schwenkbewegbar angelenkt. Die Eingangsklappen 181 sind mittels nicht dargestellter Federn, die zwischen Federlaschen 184 und einem Gehäuseteil gespannt sind, unveränderbar vorgespannt.

Das zweite Bauteil II ist durch ein Gehäuse-Oberteil 102 mit einem Gehäuseboden 103 und, an dem Gehäuseboden 103 gelagert, dem Betäubungswerkzeug 121 gebildet. Das Betäubungswerkzeug 121 weist einen Schlagbolzen 123 auf, unter dem der Fischkopf zu liegen kommt.

Nur in Fig. 2 und 4 sind Wand- und Gehäuseteile 10 eines im Übrigen nicht dargestellten Einrichtungsgehäuses zu sehen. Das Gehäuse-Oberteil 102 ist an dem in Fig. 2 nur an einer Einrichtungsseite dargestellten Gehäuseteil 10 befestigt. Allgemein sind zu der Fisch-Schlachteinrichtung 1 gehörende Organe, Aggregate und Teile an weiteren nicht dargestellten Teilen des Einrichtungsgehäuses wie Rahmen und Wänden befestigt oder gelagert.

Das dritte Bauteil wird durch die Triggereinrichtung 2 gebildet, die an dem oberen, zweiten Bauteil II allgemein ortsfest installierbar ist.

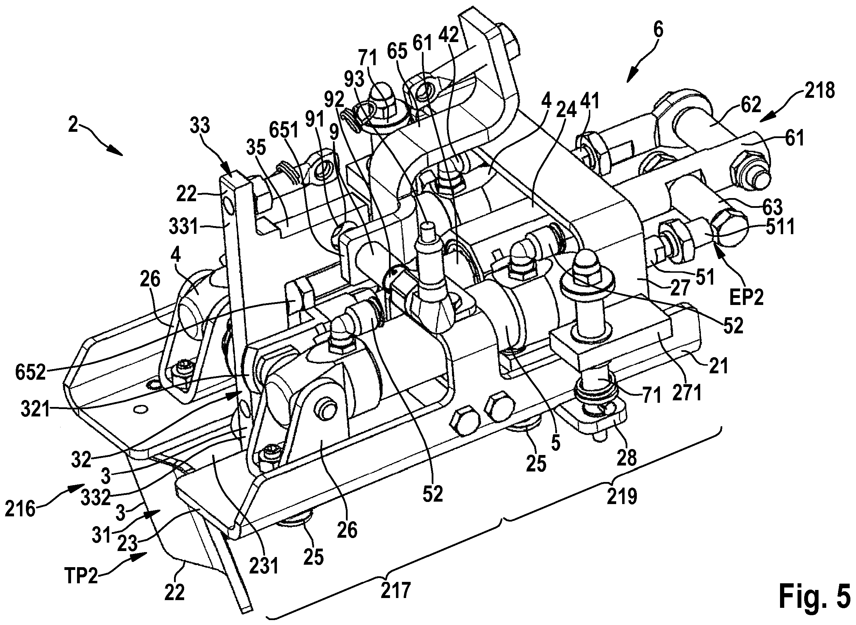

Die Triggereinrichtung 2 weist ein Chassis 21 mit einer Chassisvorderseite 216 und einer Chassisrückseite 218 auf (s. Fig. 5). Der Chassisboden ist durch eine Chassisplatte 23 gebildet, die auf dem Gehäuseboden 103 zu liegen kommt und daran in Längsrichtung des Chassis 21 zur Arretierverstellung schiebebewegbar und festsetzbar gelagert ist. Aus Fig. 2 und 4 ist eine geführte Schiebelagerung 14 mit Führungsschlitzen 141 ersichtlich, in denen an der Unterseite der Chassisplatte 23 angebrachte Stifte 25 geführt werden. Eine Arretiereinrichtung 7, mittels der das Chassis 21 bzw. die Chassisplatte 23 in unterschiedlichen Schiebepositionen an dem Gehäuseboden 103 festsetzbar ist, geht gleichfalls aus Fig. 2 und 4 hervor. An dem Chassis 21 sind seitlich im Paar Federstifte 71 angeordnet, die zwischen Lagerkonsolen 271, 28 federbelastet jeweils in eine Reihe zugehöriger Arretierlöcher 72 in dem Gehäuseboden 103 entriegelbar einrasten. Die Lagerkonsolen 271 sitzen an einer Chassis-Portalstütze 27.

Besondere Details der erfindungsgemäßen Triggereinrichtung 2, die allgemein wesentlich sind und im Ausführungsbeispiel nur exemplarisch dargestellt werden, gehen aus Fig. 5 bis 7C hervor.

Das Chassis 21 lagert zwei parallel nebeneinander angeordnete, sich in Längsrichtung des Chassis 21 erstreckende Stellglied-Aktuatoren 4, 5. Vordere Enden der Stellglied-Aktuatoren 4, 5 sind an Lagerbügeln 26 festgesetzt. In einem rückwärtigen Chassisabschnitt 219 treten an den anderen, hinteren Enden der Stellglied-Aktuatoren 4, 5 Kolbenstangen aus, die Stellglieder 41 und 51 bilden. Im Bereich zwischen den Stellglied-Aktuatoren 4, 5 ist, parallel mit diesen, eine Koppelstange 61 eines Koppelmittels 6 mittels einer an der Chassisplatte 23 festgesetzten Führungshülse 24 in Längsrichtung schiebebewegbar gelagert. Die Koppelstange 61 ist an der Chassisrückseite 218 über ein erstes Koppelelement 62 des Koppelmittels 6 zur Mitnahme mit dem einen ersten Stellglied 41 an dieses angeschlossen. Zudem ist an dem rückwärtigen Ende der Koppelstange 61 ein zweites Koppelelement 63 des Koppelmittels 6 befestigt, das vor einen Anschlagkopf 511 des anderen zweiten Stellglieds 51 in dessen Stellweg ragt. Die beiden Koppelelemente 62, 63 sind Querelemente, zum Beispiel in Form von Bolzen oder Hülsen, die quer zu der Koppelstange 62 an dieser festgesetzt sind.

An dem vorderseitigen Ende der schiebebewegbaren Koppelstange 61 ist eine Vertikalstütze 65 sowie ein in einen vorderen Chassisabschnitt 217 ragender Lagerbügel 321 befestigt. Der Lagerbügel 321 bildet ein Schwenklager 32 eines schwenkbar angelenkten, zweiarmigen Schwenkarms 33, der das Fischkopf-Anschlagelement 3 bildet. Ein unterer, die Chassisplatte 23 durch eine Ausnehmung 231 durchgreifender Arm 332 endet mit einer Fischkopf-Anschlagfläche 31 unterhalb der Chassisplatte 23. Die Fischkopf-Anschlagfläche 31 ist zum Anschlagen des Fischkopfes konkav geformt. Ein oberer Schwenkarm 331 des Schwenkarms 33 ist mittels einer Zugfeder 34 vorgespannt, die den oberen Schwenkarm 331 gegen einen an der Vertikalstütze 65 nach vorn vorstehenden Anschlagbolzen 652 spannt und zwischen das freie Ende des oberen Arms 331 und einen oberen Teil der Vertikalstütze 65 gespannt ist. Gegen die Vorspannkraft der Zugfeder 34, damit unter Rückstellkraft, ist der Schwenkarm 33 durch Schwenken geringfügig, nämlich bis zum Anschlag gegen ein an der Vertikalstütze festes Anschlagelement, zum Beispiel einen Anschlagbolzen 653, auslenkbar.

Der obere Schwenkarm 331 weist auch einen rückwärtigen Vorsprung 35 auf, in den ein Sensorloch 91 eingebracht ist, das einer Lasche 651 gegenüberliegt, die an der Vertikalstütze 65 befestigt ist. An dieser Lasche 651 ist ein Sensor 92 mit einem dem Sensorloch 91 gegenüberliegenden Sensorkopf befestigt. Das Sensorloch 91 und der Sensor 92 bilden nach Art eines Näherungsschalters eine mit dem Koppelmittel 6 verlagerbare Trigger-Sensoreinrichtung 9, die einen Sensoranschluss 93 zum Anschluss an die Einrichtungs-Steuereinrichtung 16 über den Signalweg S6 aufweist. Jede andere Trigger-Sensoreinrichtung, die mit ihren Teilen an dem schiebebewegbaren Koppelmittel 6 bzw. der Vertikalstütze 65 lagerbar ist und einen Anschlag des Fischkopfes gegen die Fischkopf-Anschlagfläche 31 registriert, kann verwendet werden.

Die beiden Stellglied-Aktuatoren 4, 5, nämlich der eine erste Stellglied-Aktuator 4 und der andere zweite Stellglied-Aktuator 5, sind erfindungsgemäß so eingerichtet, dass sie besonders zusammenwirken, um die Koppelstange 61 und damit die daran im vorderen Chassisabschnitt 217 befestigten Teile gemeinsam in unterschiedliche Schiebepositionen zu bringen. Das Fischkopf-Anschlagelement 3 wird mit der Fischkopf-Anschlagfläche 31 durch Steuerungsmittel der Einrichtungs-Steuereinrichtung in unterschiedliche Triggerpositionen TP1, TP2 und TP3 gesetzt.

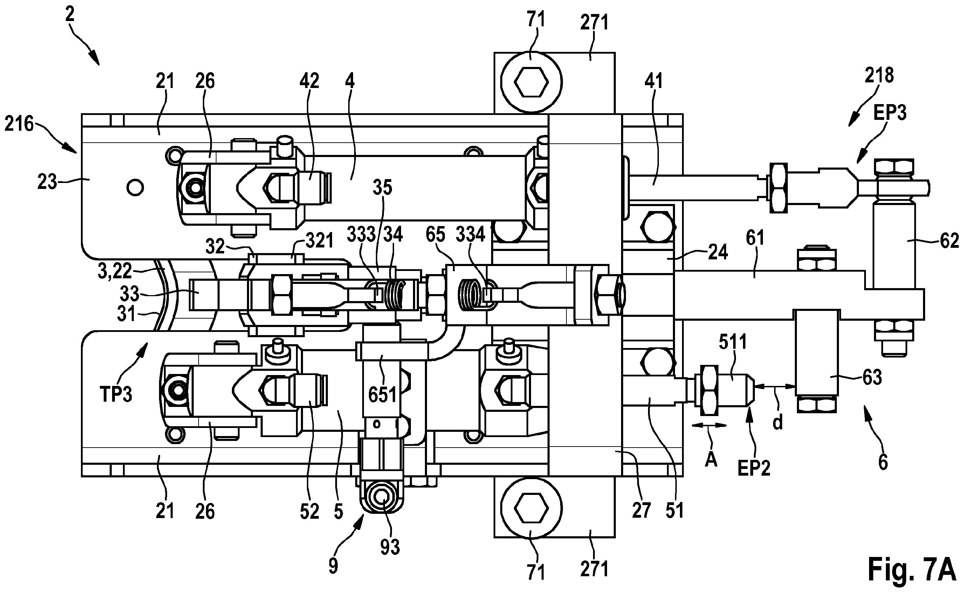

Die Triggerposition TP3, in der das Fischkopf-Anschlagelement 3 maximal zur Chassisrückseite 218 hin versetzt ist, wird durch ein Ausfahren des ersten Stellgliedes 41 mit maximalem Hubweg bewirkt. Zu diesem Zweck wird der erste Stellglied-Aktuator 4 gesteuert mit Ausschubkraft betrieben. Das erste Stellglied 41 befindet sich dann in einer stabilen und exakten Lageposition, die die feste Trigger-Einstellposition EP3 definiert. Diese Situation ist in Fig. 7A dargestellt. Vorteilhaft ist der erste Stellglied-Aktuator 4 ein bistabiler Aktuator, zweckmäßig ein Pneumatikzylinder, der mittels einer im Signalweg S2 gesteuert geschalteten Druckluftversorgung steuerbar ist. Der erste Stellglied-Aktuator 4 ist im Beispiel ein doppelwirkender Pneumatik-Zylinder mit Steuer-Luftanschlüssen 42.

Allgemein ist die Einrichtung derart, dass die feste Trigger-Einstellposition EP3 mit zugehöriger Triggerposition TP3 allein mittels des vollständig ausgefahrenen ersten Stellglieds 41 des ersten Stellglied-Aktuators 4 eingestellt wird. Hingegen erfolgt die Einstellung weiterer, zur Chassisvorderseite 216 hin versetzter Triggerpositionen, im Ausführungsbeispiel der Triggerpositionen TP1 und TP2, mittels des zweiten Stellglied-Aktuators 5. In diesen Einstellungen arbeitet der zweite Stellglied-Aktuator 5 als "Master", und der erste Stellglied-Aktuator 4 wird als "Slave" mit einer Rückholkraft betrieben, die kleiner als eine Ausschubkraft des zweiten Stellglied-Aktuators 5 gehalten wird.

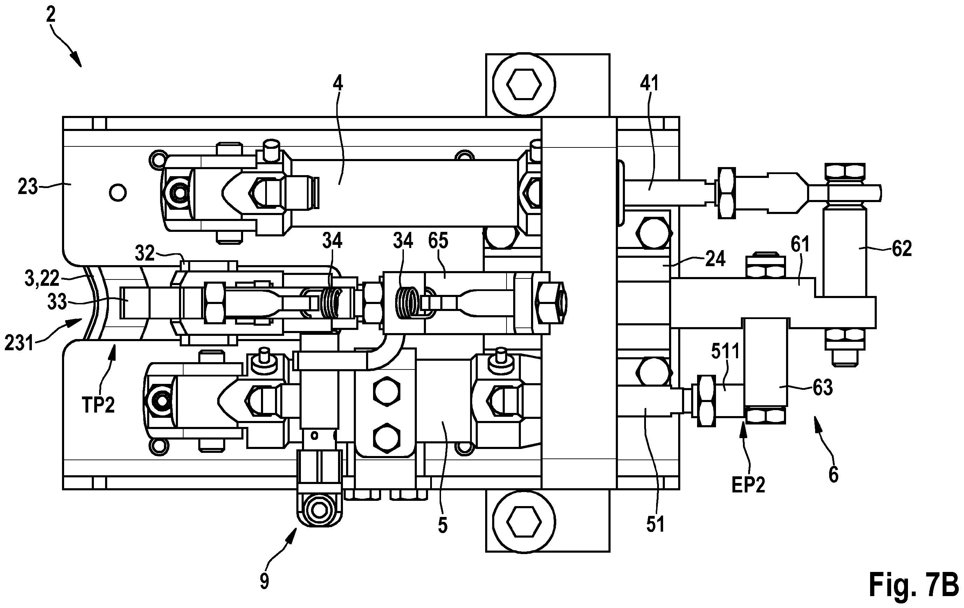

In Fig. 7A und 7B befindet sich das zweite Stellglied 51 des zweiten Stellglied-Aktuators 5 in vollständig ausgefahrener, unter Druck- oder Ausschubkraft stehender stabiler Position. Vorzugsweise wird auch der zweite Stellglied-Aktuator 5 durch einen bistabilen Aktuator, zweckmäßig einen doppelwirkenden Pneumatikzylinder mit Steuer-Luftanschlüssen 52 gebildet und über den Signalweg S3 mittels gesteuerter Luftversorgung betrieben. Das zweite Stellglied 51 ist dann wie das erste Stellglied 41 nur in zwei Endpositionen bistabil verfahrbar.

Wie zum Beispiel in Fig. 7A dargestellt, kann allgemein zwischen einem Anschlagkopf 511, zweckmäßig am freien Ende des zweiten Stellgliedes 51, und einem davorragenden Koppelelement wie dem zweiten Koppelelement 63 eine Stufendistanz d einstellbar sein. Diese kann im einfachsten Fall durch eine feste Distanz der freien Enden der in die stabilen Zustände vollständig ausgefahrenen Stellglieder 41, 51 bestimmt sein. Die Stufendistanz d kann veränderbar eingerichtet sein. Zum Beispiel wird der Anschlagkopf 511 als Justierkopf, z. B. als Schraubkopf, ausgeführt, der in einem Einstellbereich A axial verstellbar ist. Insbesondere manuell sind dann entsprechend unterschiedliche Distanzen d einstellbar. Andere Verstelleinrichtungen zum Ändern des festen Abstandes d können vorgesehen sein. Zum Beispiel kann das zweite Koppelelement 63 an der Koppelstange 61 axial versetzbar angeordnet sein. Der Abstand d bestimmt eine Einstellstufe, nämlich das Maß der Verlagerung des Fischkopf-Anschlagelements 3 aus der Triggerposition TP3 in die Triggerposition TP2 oder umgekehrt.

In Fig. 7B befindet sich die Triggereinrichtung 2 im Zustand einer Einstellung mit fester Trigger-Einstellposition EP2 und zugehöriger Triggerposition TP2. Die Einstellung ist, ausgehend von der Position EP3 des vollständig ausgefahrenen ersten Stellgliedes 41, dadurch bewirkbar, dass der erste Stellglied-Aktuator 4 gesteuert so betrieben wird, dass das erste Stellglied 41 mit Rückholkraft eingefahren wird. Infolgedessen schlägt das über das erste Koppelelement 62, das allgemein zugfest an das erste Stellglied 41 angeschlossen ist, und über die Koppelstange 61 mitgenommene zweite Koppelelement 63 gegen den Anschlagkopf 511 an. In dieser Position wird das zweite Koppelelement 63 gehalten, und zwar durch das gesteuerte Zurückholen des ersten Stellgliedes 41, insbesondere mit aufrechterhaltener Rückholkraft. Diese Rückholkraft wird kleiner als die Ausschubkraft des zweiten Stellglied-Aktuators 5 gehalten. In der vollständig ausgefahrenen Position befindet sich das zweite Stellglied 51 auch unter Belastung in stabiler und akkurater Trigger-Einstellposition EP2. Die Triggerposition TP2 in der sich das Fischkopf-Anschlagelement 3 mit der Fischkopf-Anschlagfläche 31 befindet, liegt etwa in der Mitte des vorderen Chassisabschnitts 217, wie dies aus Fig. 5 ersichtlich ist.

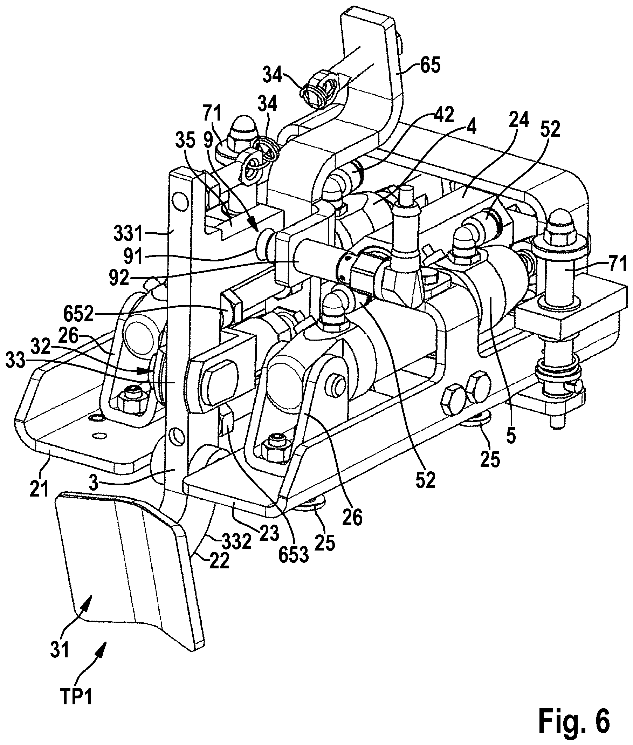

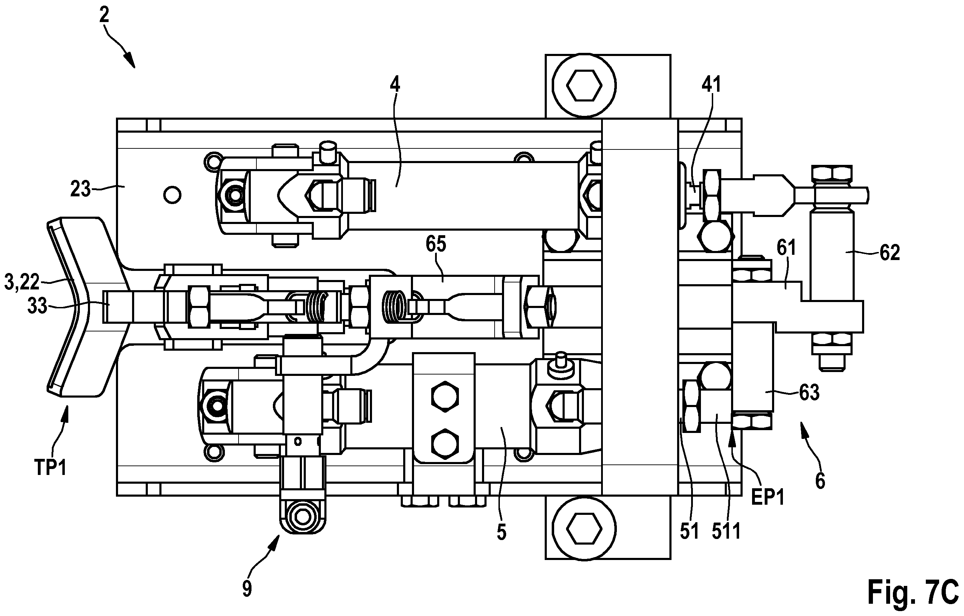

In Fig. 6 und 7C befindet sich das zweite Stellglied 51 des zweiten Stellglied-Aktuators 5 in vollständig zurückgefahrenem oder eingefahrenem Zustand, sodass der Anschlagkopf 511 auch unter hoher Anschlagkraft eine lagesichere und akkurate Position, nämlich eine feste Trigger-Einstellposition EP1 einnimmt. Das zweite Stellglied 51 kann sich, fischgrößenabhängig gesteuert, bereits in diesem Zustand befinden, oder der Zustand wird dadurch erreicht, dass der zweite Stellglied-Aktuator 5 unter Rückholkraft gesetzt wird, wobei er aus dem Zustand EP2 mit vollständig ausgefahrenem zweiten Stellglied 51 in den Zustand mit vollständig eingefahrenem zweiten Stellglied 51 mittels der Einrichtungs-Steuereinrichtung 16 gesteuert wird. Der erste Stellglied-Aktuator 4 wird dann so gesteuert, dass das erste Stellglied 41 unter Rückholkraft gesetzt wird oder unter Rückholkraft gesetzt bleibt, um den Anschlag des zweiten Koppelelements 63 gegen den Anschlagkopf 511 zu bewirken. Vorzugsweise wird die Rückholkraft des ersten Stellglied-Aktuators 4 größer als die Rückholkraft des zweiten Stellglied-Aktuators 5 gehalten. Der Abstand zwischen den festen Trigger-Einstellpositionen EP1 und EP2 bestimmt eine weitere bzw. zweite Einstellstufe. Die Triggerposition TP1 des Fischkopf-Anschlagelements 3, die zu der festen Trigger-Einstellposition EP1 gehört, befindet sich in einem vorderen Bereich des vorderen Chassisabschnitts 217 mit an der Chassisvorderseite 216 hervorstehender Fischkopf-Anschlagfläche 31.

Um das zweite Stellglied 51, ausgehend von der Trigger-Einstellposition EP1, in die Trigger-Einstellposition EP2 zu bringen, wird das zweite Stellglied 51 vollständig ausgefahren. Der erste Stellglied-Aktuator 4 wird zugleich so geschaltet, dass das zweite Koppelelement 63 und damit das Koppelmittel 6 ausreichend frei in die zweite Trigger-Einstellposition EP2 bewegbar sind. Ein Steuerbetrieb besteht darin, dass das unter Rückholkraft stehende oder gesetzte erste Stellglied 41 aus dem ersten Stellglied-Aktuator 4 herausgezogen wird. Zu diesem Zweck wird das zweite Stellglied 51 mittels Steuerung des zweiten Stellglied-Aktuators 5 mit einer Ausschubkraft betrieben, die größer als die Rückholkraft des ersten Stellglied-Aktuators 4 ist und unter Anschlag des zweiten Stellgliedes 51 an dem zweiten Koppelelement 63 über dieses und das erste Koppelelement 62, das zugfest mit dem ersten Stellglied 41 verbunden ist, an dem ersten Stellglied 41 angreift. In der Trigger-Einstellposition EP2 wird die zu der Rückholkraft des ersten Stellglied-Aktuators 4 größere Ausschubkraft des zweiten Stellglied-Aktuators 5 beibehalten. Ein anderer Steuerbetrieb besteht darin, dass der erste Stellglied-Aktuator 4 während des Ausschubs des zweiten Stellgliedes 51 drucklos geschaltet oder in seinen ausgefahrenen Zustand versetzt wird und dann zum stabilen Anschlagen des zweiten Koppelelements 63 gegen das in seine Endstellung ausgefahrene zweite Stellglied 51 mit Rückholkraft beaufschlagt wird, die kleiner als die Halte- bzw. Ausschubkraft des zweiten Stellglied-Aktuators 5 ist.

Im Ausführungsbeispiel sind für das Fischkopf-Anschlagelement 3 drei Triggerpositionen TP1, TP2 und TP3 eingerichtet worden, die, wie beschrieben, durch das fischgrößenabhängig gesteuerte Wechselspiel der beiden Stellglied-Aktuatoren 4,5 eingestellt werden. Wie Aus Fig. 2 bis 4 ersichtlich, ist die Triggerposition TP1 kleinen Fischgrößen, die Triggerposition TP2 mittleren Fischgrößen und die Triggerposition TP3 großen Fischgrößen abgestuft zugeordnet. Es ist gefunden worden, dass mit den insbesondere drei Einstellungen, die in Abhängigkeit von den drei Fisch-Größenklassen gesteuert automatisch erfolgen, die Fische bereichsweise ausreichend positioniert werden, um mittels der Fisch-Schlachtwerkzeuge 12 zuverlässig und tierschutzgerecht betäubt und ausgeblutet zu werden. Um die drei Triggerpositionen TP1, TP2 und TP3 vor Aufnahme des automatischen Betriebs besonders auf eine Fischart anzupassen, wird die Triggereinrichtung 2 mittels der optionalen Arretiereinrichtung 7 in angepasstem Maß in Richtung des Aufnahmeraumeingangs 111 oder entgegengesetzt in Richtung des Aufnahmeraumausgangs 112 manuell positioniert. Eine weitere manuelle Voreinstellung kann darin bestehen, dass der Anschlagkopf 511 des zweiten Stellglieds 51, wie beschrieben, im Einstellbereich A justiert wird.

Das beschriebene gesteuerte Flankenklappenpaar 8 optimiert die Nutzung der insbesondere nur drei automatisch gesetzten Triggerpositionen TP1, TP2 und TP3. Die mit dem Flankenklappenpaar 8 eingerichtete Zentrierung, die größenabhängig, vorzugsweise direkt dickenabhängig, und damit für jede Fischgröße oder Fischgrößenbereiche bzw. Dickendimensionen einheitlich akkurat durchgeführt wird, wirkt einer seitlichen Streuung der Fischkopflagen oder einer Abweichung von einer einheitlichen Mittenlage unter den Fisch-Schlachtwerkzeugen 12 entgegen, sodass die Größenbereiche der (drei) Fischgruppen ohne Beeinträchtigung eines tierschutzgerechten Schlachterfolges optimal groß wählbar sind.

Die Funktionsweise der Triggereinrichtung 2 bzw. der Fisch-Schlachteinrichung 1 geht bereits aus der bisherigen Beschreibung hervor. Es ist allgemein besonders hervorzuheben, dass das Fischkopf-Anschlagelement 3 und die Trigger-Sensoreinrichtung 9 beide an dem Koppelmittel 6 gelagert und damit zusammen und einheitlich beim Verstellen in die Triggerpositionen verschiebbar sind. Man erreicht damit, dass das Fischkopf-Anschlagelement 3 unmittelbar das Triggerelement zum Auslösen/Bewirken des Betriebs der Fisch-Schlachtwerkzeuge 12 ist. Im Ausführungsbeispiel arbeitet die von dem Koppelmittel 6 mitgenommene Trigger-Sensoreinrichtung 9 derart, dass der Anschlag eines Fischkopfes gegen die Fischkopf-Anschlagfläche 31 das geringfügige, definiert begrenzte Schwenk-Auslenken des Schwenkarms 33 bewirkt, wobei eine resultierende Positionsänderung des Sensorloches 91 oder eines gleichwirkenden signifikanten Bezugselements in Bezug auf den Sensor 92 von diesem erfasst und als Trigger-Steuersignal über den Signalweg S4 abgegeben wird, um die Fisch-Schlachtwerkzeuge 12 in Betrieb zu setzten. Im Übrigen läuft der Bearbeitungsbetrieb in der Fisch-Schlachteinrichtung 1 in an sich bekannter Weise ab. Nach dem Schlachtbetrieb der Fisch-Schlachtwerkzeuge 12 zum Schlachten des an den Triggerpositionen TP1, TP2 und TP3 oder weiteren Triggerpositionen gestoppten Fisches, also in den zugehörigen temporären Stopppositionen, werden die Fisch-Schlachtwerkezeuge 12 spontan zurückgefahren und die Bodenklappe 19 zur Abgabe des geschlachteten Fisches kurzzeitig geöffnet. Die im Ausführungsbeispiel erfindungsgemäß zusätzlich vorgesehenen, den zu schlachtenden Fisch automatisch zentrierenden Flankenklappen 81 können zur Freigabe des geschlachteten Fisches vorübergehend drucklos geschaltet werden.

## Patentansprüche

1. Fisch-Schlachteinrichtung (1), umfassend
- einen Fisch-Aufnahmeraum (11), der durch einen Aufnahmeraumeingang (111) mit zu schlachtenden Fischen (100) in Kopfvoraus-Lage beschickbar ist,
- eine Fisch-Positioniereinrichtung (13), eingerichtet zum steuerbaren Halten und Positionieren eines Fisches (100) in dem Fisch-Aufnahmeraum (11) in einer temporären Stoppposition des Fisches, die wenigstens einem steuerbaren Fisch-Schlachtwerkzeug (12) zum Schlachten des Fisches zugeordnet ist, sowie eingerichtet zur steuerbaren Freigabe des geschlachteten Fisches, umfassend ein Fischkopf-Anschlagelement (3), gegen das der Fischkopf des Fisches in der temporären Stoppposition anschlägt, das zudem ein Triggerelement (22) zum Steuern des wenigstens einen steuerbaren Fisch-Schlachtwerkzeugs (12) bildet und mittels einer in Abhängigkeit von der Fischgröße steuerbaren Triggereinrichtung (2) in unterschiedliche, jeweils die temporäre Stoppposition des Fisches bestimmende, Triggerpositionen bewegbar ist, sowie umfassend ein Abgabemittel zur Freigabe und Abgabe des bearbeiteten Fisches,
- das wenigstens eine steuerbare Fisch-Schlachtwerkzeug (12) zum Einwirken auf den Fisch in seiner temporären Stoppposition,
- eine Trigger-Sensoreinrichtung (9) zum Feststellen des Anschlagens eines Fischkopfes gegen das Fischkopf-Anschlagelement (3) und
- die steuerbare Triggereinrichtung (2), umfassend das Fischkopf-Anschlagelement (3), einen stationär angeordneten steuerbaren ersten Stellglied-Aktuator (4) mit einem ersten Stellglied (41) sowie ein Koppelmittel (6), das das Fischkopf-Anschlagelement (3) mit dem ersten Stellglied (41) des ersten Stellglied-Aktuators (4) zur damit fischgrößenabhängig steuerbaren Stellbewegung des Fischkopf-Anschlagelements (3) in die Triggerpositionen verbindet,
**dadurch gekennzeichnet, dass** die Triggereinrichtung (2) einen zum fischgrößenabhängigen Einstellen von wenigstens zwei Triggerpositionen (TP1, TP2) eingerichteten, stationär angeordneten steuerbaren zweiten Stellglied-Aktuator (5) mit einem zweiten Stellglied (51) umfasst, wobei das zweite Stellglied (51) steuerbar in wenigstens zwei feste Trigger-Einstellpositionen (EP1, EP2) setzbar ist, und dass die beiden Stellglieder (41, 51), das heißt das erste Stellglied (41) und das zweite Stellglied (51), derart koppelbar angeordnet sind, dass eine Stellbewegung des ersten Stellgliedes (41) durch einen Koppelanschlag gegen das in eine seiner festen Trigger-Einstellpositionen (EP1, EP2) gesetzte zweite Stellglied (51) gestoppt und dadurch eine genannte Triggerposition (TP1, TP2) des Fischkopf-Anschlagelements (3) zugehörig zu der gesetzten festen Trigger-Einstellposition (EP1, EP2) des zweiten Stellgliedes (51) bewirkt wird.

2. Fisch-Schlachteinrichtung nach Anspruch 1, **dadurch gekenn**- **zeichnet**, dass die Fisch-Positioniereinrichtung (13) zum Zentrieren des Fisches (100) in der temporären Stoppposition wenigstens ein Paar (8) Flankenklappen (81) umfasst, die den Fisch-Aufnahmeraum (11) seitlich begrenzen, und dass die beiden Flankenklappen (81) in einer definierten Grundposition, in der jeder Fisch zwischen die beiden Flankenklappen (81) gelangt, mit von der Fischgröße dieses Fisches abhängiger Druckkraft beaufschlagbar sind, so dass die beiden Flankenklappen (81) mittels des Fisches gegen die Druckkraft fischgrößenabhängig verdrängbar sind.

3. Fisch-Schlachteinrichtung nach Anspruch 1 oder 2, **d**a**durch gekenn**- **zeichnet**, dass sie eine die Fischgröße erfassende Fischgrößen-Erfassungseinrichtung (15) zum Erzeugen fischgrößenabhängiger Steuersignale umfasst.

4. Fisch-Schlachteinrichtung nach Anspruch 3, **dadurch gekennzeichnet, dass** sie eine Einrichtungs-Steuereinrichtung (16) umfasst, die zur fischgrößenabhängigen Betriebssteuerung wenigstens mit der Fischgrößen-Erfassungseinrichtung (15), den steuerbaren Stellglied-Aktuatoren (4, 5) der Triggereinrichtung (2), der Trigger-Sensoreinrichtung (9), dem wenigstens einen steuerbaren Fisch-Schlachtwerkzeug (12) und dem steuerbaren Abgabemittel verbunden ist.

5. Fisch-Schlachteinrichtung nach einem der Ansprüche 1 bis 4, **dadurch gekennzeichnet, dass** die Fisch-Schlachteinrichtung (1) ein stationäres Gehäuse (10), ein ein Montagegestell der Triggereinrichtung (2) bildendes Chassis (21) und eine Arretiereinrichtung (7) aufweist, mit der das Chassis (21) zum Voreinstellen eines Einstellabstandes des Fischkopf-Anschlagelements (3) von dem Aufnahmeraumeingang (111) an dem Gehäuse (10) fest und einstellbar arretierbar ist.

6. Fisch-Schlachteinrichtung nach einem der Ansprüche 1 bis 5, **dadurch gekennzeichnet, dass** zwischen einem Gehäuseteil der Fisch-Schlachteinrichtung (1) und einem Chassis (21) der Triggereinrichtung (2) ein Schiebesitz mit einer Arretiereinrichtung (7) ausgebildet ist, wobei das Chassis (21) der Triggereinrichtung (2) zum Voreinstellen eines Einstellabstandes des Fischkopf-Anschlagelements (3) von dem Aufnahmeraumeingang (111) des Fisch-Aufnahmeraums (11) an dem Gehäuseteil der Fisch-Schlachteinrichtung (1) einstellbar festsetzbar ist.

7. Triggereinrichtung (2), eingerichtet für eine Fisch-Schlachteinrichtung mit wenigstens einem Fisch-Schlachtwerkzeug (12) zum Einwirken auf einen Fischkopf zum Schlachten des Fisches (100), insbesondere für eine Fisch-Schlachteinrichtung (1) nach einem der Ansprüche 1 bis 6, umfassend ein Chassis (21), ein an dem Chassis (21) gelagertes Fischkopf-Anschlagelement (3), das zum Anschlagen des Fischkopfes eines zu schlachtenden Fisches eingerichtet ist und ein durch Anschlagen des Fischkopfes betätigbares Triggerelement (22) bildet, das mit einer Steuerung zum Betätigen eines Fisch-Schlachtwerkzeuges (12) verbindbar ist, einen an dem Chassis (21) angeordneten steuerbaren ersten Stellglied-Aktuator (4) mit einem ersten Stellglied (41), sowie ein an dem Chassis (21) schiebebewegbar gelagertes Koppelmittel (6), das das Fischkopf-Anschlagelement (3) schiebebewegbar an dem Chassis (21) lagert und mit dem ersten Stellglied (41) des ersten Stellglied-Aktuators (4) zur damit fischgrößenabhängig steuerbaren Stellbewegung des Fischkopf-Anschlagelements (3) verbindet, **dadurch gekennzeichnet, dass** die Triggereinrichtung (2) einen zum fischgrößenabhängigen Einstellen von wenigstens zwei Triggerpositionen (TP1, TP2) eingerichteten, an dem Chassis (21) angeordneten steuerbaren zweiten Stellglied-Aktuator (5) mit einem zweiten Stellglied (51) umfasst, wobei das zweite Stellglied (51) steuerbar in wenigstens zwei feste Trigger-Einstellpositionen (EP1, EP2) des zweiten Stellglieds setzbar ist, und dass die beiden Stellglieder (41, 51), das heißt das erste Stellglied (41) und das zweite Stellglied (51), derart koppelbar angeordnet sind, dass eine Stellbewegung des ersten Stellgliedes (41) durch einen Koppelanschlag gegen das in eine seiner festen Trigger-Einstellpositionen (EP1, EP2) gesetzte zweite Stellglied gestoppt und dadurch eine genannte Triggerposition (TP1, TP2) des Fischkopf-Anschlagelements (3) zugehörig zu der gesetzten festen Trigger-Einstellposition (EP1, EP2) des zweiten Stellgliedes (51) bewirkt wird.

8. Triggereinrichtung nach Anspruch 7, **dadurch gekennzeichnet, dass** das erste Stellglied (41) des ersten Stellglied-Aktuators (4) mit maximaler Stellverlagerung in eine feste Trigger-Einstellposition (EP3) des ersten Stellglieds (41) bewegbar ist, die durch eine maximale Stellverlagerung des ersten Stellgliedes (41) bestimmt ist und zugehörig eine Triggerposition (TP3) des Fischkopf-Anschlagelements (3) bewirkt, und dass weitere Triggerpositionen (TP1, TP2) des Fischkopf-Anschlagelements (3) durch die festen Trigger-Einstellpositionen (EP1, EP2) des zweiten Stellgliedes (51) bestimmt sind.

9. Triggereinrichtung nach Anspruch 7 oder 8, **dadurch gekennzeichnet, dass** das zweite Stellglied (51) bistabil in nur zwei feste Trigger-Einstellpositionen (EP1, EP2) des zweiten Stellglied-Aktuators (5) setzbar ist, die zwei zugehörige Triggerpositionen (TP1, TP2) des Fischkopf-Anschlagelements (3) bestimmen.

10. Triggereinrichtung nach einem der Ansprüche 7 bis 9, **dadurch gekennzeichnet, dass** das Chassis (21) eine Chassisvorderseite (216) und einen vorderen Chassisabschnitt (217) sowie eine Chassisrückseite (218) und einen rückwärtigen Chassisabschnitt (219) aufweist, wobei das Fischkopf-Anschlagelement (3) in dem vorderen Chassisabschnitt mit einer an der Chassisvorderseite zum Anschlagen des Fischkopfes freien Fischkopf-Anschlagfläche (31) angeordnet ist.

11. Triggereinrichtung nach Anspruch 10, **dadurch gekennzeichnet, dass** das Fischkopf-Anschlagelement (3) in eine von der Chassisvorderseite (216) entfernt gelegene rückwärtige Triggerposition (TP3) verlagerbar ist, wobei wenigstens eine der zu dem zweiten Stellglied-Aktuator (5) gehörenden Triggerpositionen (TP1, TP2) von der rückwärtigen Triggerposition (TP3) zur Chassisvorderseite (216) hin distanziert ist.

12. Triggereinrichtung nach Anspruch 11, **dadurch gekennzeichnet, dass**, zugehörig zu den festen Trigger-Einstellpositionen (EP1, EP2, EP3), eine vordere Triggerposition (TP1) zum Anschlagen von Fischköpfen kleiner Größe, wenigstens eine mittlere Triggerposition (TP2) zwischen der vorderen und der rückwärtigen Triggerposition (TP3) zum Anschlagen von Fischköpfen mittlerer Größe und die rückwärtige Triggerposition (TP3) zum Anschlagen von Fischköpfen großer Größe einstellbar sind.

13. Triggereinrichtung nach einem der Ansprüche 7 bis 12, **dadurch gekennzeichnet, dass** das Koppelmittel (6) eine an dem Chassis (21) schiebebewegbar gelagerte Koppelstange (61), ein die Koppelstange (61) an das erste Stellglied (41) anschließendes erstes Koppelelement (62) und ein an der Koppelstange (61) festgesetztes zweites Koppelelement (63) aufweist, das den Koppelanschlag gegen das zweite Stellglied (51) herstellt, wenn sich dieses in einer der einstellbaren festen Trigger-Einstellposition (EP1, EP2) befindet.

14. Triggereinrichtung nach einem der Ansprüche 7 bis 13, **dadurch gekennzeichnet, dass** die beiden Stellglied-Aktuatoren (4, 5), das heißt der erste Stellglied-Aktuator (4) und der zweite Stellglied-Aktuator (5), an dem Chassis (21) parallel nebeneinander angeordnet sind, wobei sich die beiden Stellglieder (41, 51) an einem rückwärtigen Chassisabschnitt (219) erstrecken, und dass wenigstens ein Teil des Koppelmittels (6) parallel neben den beiden Stellglied-Aktuatoren (4, 5) angeordnet ist.

15. Triggereinrichtung nach einem der Ansprüche 7 bis 14, **dadurch gekennzeichnet, dass** an dem Koppelmittel (6) der Triggereinrichtung (2) eine mit dem Fischkopf-Anschlagelement (3) verlagerbare Trigger-Sensoreinrichtung (9) zum Feststellen des Anschlagens eines Fischkopfes gegen das Fischkopf-Anschlagelement (3) angeordnet ist, wobei das Fischkopf-Anschlagelement (3) einen Bestandteil der Sensoreinrichtung (9) bildet.

16. Triggereinrichtung nach einem der Ansprüche 7 bis 15, **dadurch gekennzeichnet, dass** das Fischkopf-Anschlagelement (3) zum Erfassen des Anschlagens eines Fischkopfes gegen das Fischkopf-Anschlagelement (3), gegen Rückstellkraft begrenzt ausweichbar, an dem Koppelmittel (6) gelagert ist.

17. Triggereinrichtung nach einem der Ansprüche 7 bis 16, **dadurch gekennzeichnet, dass** eine Distanz (d) zwischen dem zweiten Stellglied (51) und einem Koppelelement (63) des Koppelmittels (6), mit dem die beiden Stellglieder (41, 51) koppelbar sind, einstellbar ist.

## Claims

1. Fish slaughter device (1), comprising
- a fish receiving space (11), which can be charged with fish (100) to be slaughtered in the head-first position through a receiving space entry (111),
- a fish positioning device (13), configured for controllably holding and positioning a fish (100) in the fish receiving space (11) in a temporary stop position of said fish, which is associated with at least one controllable fish slaughter tool (12) for slaughtering the fish, and also configured for controllably releasing the slaughtered fish, comprising a fish head abutment element (3), against which the fish head of the fish abuts in the temporary stop position, which in addition forms a trigger element (22) for controlling the at least one controllable fish slaughter tool (12) and can be moved by means of a trigger device (2), which is controllable as a function of the fish size, into different trigger positions each determining the temporary stop position of the fish, and comprising a delivery means for releasing and delivering the processed fish,
- the at least one controllable fish slaughter tool (12) for acting on the fish in its temporary stop position,
- a trigger sensor device (9) for detecting the abutment of a fish head against the fish head abutment element (3) and
- the controllable trigger device (2), comprising the fish head abutment element (3), a stationary, controllable first control actuator (4) with a first actuator element (41) and a coupling means (6) which connects the fish head abutment element (3) to the first actuator element (41) of the first control actuator (4) for fish-size-dependent controllable adjusting movement of the fish head abutment element (3) into the trigger positions,
**characterised in that** the trigger device (2) comprises a stationary, controllable second control actuator (5) configured for fish-size-dependent adjustment of at least two trigger positions (TP1, TP2) having a second actuator element (51), wherein the second actuator element (51) can be placed controllably into at least two fixed trigger adjustment positions (EP1, EP2), and that the two actuator elements (41, 51), i.e. the first actuator element (41) and the second actuator element (51) are coupled in such a manner that an adjusting movement of the first actuator element (41) is stopped by a coupling impact against the second actuator element (51) placed in one of its fixed trigger adjustment positions (EP1, EP2) and thereby brings about an associated said trigger position (TP1, TP2) of the fish head abutment element (3) associated with the set fixed trigger adjustment position (EP1, EP2) of the second actuator element (51).

2. Fish slaughter device according to claim 1, **characterised in that** the fish positioning device (13) for centring the fish (100) in the temporary stop position comprises at least one pair (8) of flank flaps (81) which limit the fish receiving space (11) laterally, and that the two flank flaps (81) can be acted upon by a compressive force, which is dependent upon the fish size of the fish, in a defined home position in which each fish arrives between the two flank flaps (81), such that the fish can displace the two flank flaps (81) against the compressive force depending on the fish size.

3. Fish slaughter device according to claim 1 or 2, **characterised in that** it comprises a fish-size determining device (15) determining the fish size for generating fish-size-dependent control signals.

4. Fish slaughter device according to claim 3, **characterised in that** it comprises a device controller (16) which, for fish-size-dependent operational control, is connected to at least the fish-size determining device (15), the controllable control actuators (4, 5) of the trigger device (2), the trigger sensor device (9), the at least one controllable fish slaughter tool (12) and the controllable delivery means.

5. Fish slaughter device according to one of claims 1 to 4, **characterised in that** the fish slaughter device (1) has a stationary housing (10), a chassis (21) forming a mounting frame of the trigger device (2) and a clamping device (7) with which the chassis (21) can be fixedly and adjustably clamped for presetting an adjusting distance of the fish head abutment element (3) to the receiving space entry (111) on the housing (10).

6. Fish slaughter device according to one of claims 1 to 5, **character** - **is**e**d in** that a sliding seat with a clamping device (7) is designed between a housing part of the fish slaughter device (1) and a chassis (21) of the trigger device (2), wherein the chassis (21) of the trigger device (2) can be adjustably fixed for presetting an adjusting distance of the fish head abutment element (3) to the receiving space entry (111) of the fish receiving space (11) on the housing part of the fish slaughter device (1).

7. Trigger device (2) configured for a fish slaughter device having at least one fish slaughter tool (12) for acting on a fish head for slaughtering the fish (100), in particular for a fish slaughter device (1) according to one of claims 1 to 6, comprising a chassis (21), a fish head abutment element (3) mounted on said chassis (21), which abutment element is configured for abutment of the fish head of a fish to be slaughtered, and forming a trigger element (22) which is operable due to abutment of the fish head, said trigger element being connectable to a controller for operating a fish slaughter tool (12), a controllable first control actuator (4) arranged on the chassis (21) with a first actuator element (41), as well as a coupling means (6) slidingly mounted on the chassis (21), which slidingly mounts the fish head abutment element (3) on the chassis (21) and connects it to the first actuator element (41) of the first control actuator (4) for adjusting movement of the fish head abutment element (3) which can be controlled depending on the fish size, **characterised in that** the trigger device (2) comprises a controllable second control actuator (5), which is arranged on the chassis (21), configured for fish-size-dependent adjustment of at least two trigger positions (TP1, TP2) having a second actuator element (51), wherein the second actuator element (51) can be placed controllably into at least two fixed trigger adjustment positions (EP1, EP2) of the second actuator element, and that the two actuator elements (41, 51), i.e. the first actuator element (41) and the second actuator element (51) are coupled in such a manner that an adjusting movement of the first actuator element (41) is stopped by a coupling impact against the second actuator element placed in one of its fixed trigger adjustment positions (EP1, EP2) and thereby brings about a said trigger position (TP1, TP2) of the fish head abutment element (3) associated with the set fixed trigger adjustment position (EP1, EP2) of the second actuator element (51).

8. Trigger device according to claim 7, **characterised in that** the first actuator element (41) of the first control actuator 4 can be moved with maximum positioning displacement into a fixed trigger setting position (EP3) of the first actuator element (41), which is determined by a maximum position displacement of the first actuator element (41) and correspondingly brings about a trigger position (TP3) of the fish head abutment element (3), and that further trigger positions (TP1, TP2) of the fish head abutment element (3) are determined by the fixed trigger adjustment positions (EP1, EP2) of the second actuator element (51).

9. Trigger device according to claim 7 or 8, **characterised in that** the second actuator element (51) can be placed bistably into only two fixed trigger adjustment positions (EP1, EP2) of the second control actuator (5), said positions determining two corresponding trigger positions (TP1, TP2) of the fish head abutment element (3).

10. Trigger device according to one of claims 7 to 9, **characterised in that** the chassis (21) has a front side of the chassis (216) and a front chassis section (217) as well as a rear side of the chassis (218) and a rear chassis section (219), wherein the fish head abutment element (3) is arranged in the front chassis section with a free fish head abutment surface (31) on the front side of the chassis for abutment of the fish head.

11. Trigger device according to claim 10, **characterised in that** the fish head abutment element (3) can be displaced into a rear trigger position (TP3) remote from the front side of the chassis (216), wherein at least one of the trigger positions (TP1, TP2) associated with the second control actuator (5) is distanced from the rear trigger position (TP3) towards the front side of the chassis (216).

12. Trigger device according to claim 11, **characterised in that**, corresponding to the fixed trigger adjustment positions (EP1, EP2, EP3), a front trigger position (TP1) for the abutment of fish heads of small size, at least one middle trigger position (TP2) between the front and the rear trigger position (TP3) for the abutment of fish heads of medium size, and the rear trigger position (TP3) for the abutment of fish heads of large size can be adjusted.

13. Trigger device according to one of claims 7 to 12, **characterised in that** the coupling means (6) has a coupling rod (61) slidingly mounted on the chassis (21), a first coupling element (62) connecting the coupling rod (61) to the first actuator element (41) and a second coupling element (63) fixed to the coupling rod (61) which creates the coupling abutment to the second actuator element (51) when it is in one of the adjustable fixed trigger adjustment positions (EP1, EP2).

14. Trigger device according to one of claims 7 to 13, **characterised in that** the two control actuators (4, 5), i.e. the first control actuator (4) and the second control actuator (5), are arranged in parallel next to each other on the chassis (21), wherein the two actuator elements (41, 51) extend on a rear chassis section (219), and that at least part of the coupling means (6) is arranged in parallel to the two control actuators (4, 5).

15. Trigger device according to one of claims 7 to 14, **characterised in that** a trigger sensor device (9), which can be displaced with the fish head abutment element (3) for detecting the abutment of a fish head against the fish head abutment element (3), is arranged on the coupling means (6) of the trigger device (2), wherein the fish head abutment element (3) forms part of the sensor device (9)

16. Trigger device according to one of claims 7 to 15, **characterised in that** the fish head abutment element (3) for detecting the abutment of a fish head against the fish head abutment element (3), which yields to a limited extent against a restoring force, is mounted on the coupling means (6).

17. Trigger device according to one of claims 7 to 16, **characterised in that** a distance (d) can be adjusted between the second actuator element (51) and a coupling element (63) of the coupling means (6), with which the two actuator elements (41, 51) can be coupled.

## Revendications

1. Dispositif d'abattage de poisson (1), comprenant
- un espace de réception de poisson (11) qui peut être alimenté par une entrée d'espace de réception (111) avec des poissons (100) qu'il s'agit d'abattre en position tête la première,
- un dispositif de positionnement de poisson (13), configuré pour maintenir et positionner de manière commandable un poisson (100) dans l'espace de réception de poisson (11) dans une position d'arrêt temporaire du poisson, qui est associé à au moins un outil d'abattage de poisson commandable (12) destiné à abattre le poisson, ainsi que configuré pour libérer de manière commandable le poisson abattu, comprenant un élément de butée de tête de poisson (3) contre lequel la tête de poisson du poisson vient en butée dans la position d'arrêt temporaire, qui forme en outre un élément de déclenchement (22) destiné à commander ledit au moins un outil d'abattage de poisson commandable (12) et qui peut être déplacé au moyen d'un dispositif de déclenchement (2) commandable en fonction de la taille du poisson dans des positions de déclenchement différentes, déterminant à chaque fois la position d'arrêt temporaire du poisson, ainsi que comprenant un moyen d'évacuation pour libérer et évacuer le poisson traité,
- ledit au moins un outil d'abattage de poisson commandable (12) destiné à agir sur le poisson dans sa position d'arrêt temporaire,
- un dispositif capteur de déclenchement (9) destiné à identifier la butée d'une tête de poisson contre l'élément de butée de tête de poisson (3) et
- le dispositif de déclenchement commandable (2), comprenant l'élément de butée de tête de poisson (3), un premier actionneur-positionneur (4) commandable, agencé de manière stationnaire, avec un premier positionneur (41), ainsi qu'un moyen de couplage (6) qui relie l'élément de butée de tête de poisson (3) au premier positionneur (41) du premier actionneur-positionneur (4) pour ainsi déplacer et positionner de manière commandable l'élément de butée de tête de poisson (3) en fonction de la taille du poisson dans les positions de déclenchement,
**caractérisé en ce que** le dispositif de déclenchement (2) comprend un second actionneur-positionneur (5) commandable, agencé de manière stationnaire, configuré pour ajuster en fonction de la taille du poisson au moins deux positions de déclenchement (TP1, TP2) avec un second positionneur (51), dans lequel le second positionneur (51) peut être placé de manière commandable dans au moins deux positions d'ajustage de déclenchement fixes (EP1, EP2), et **en ce que** les deux positionneurs (41, 51), à savoir le premier positionneur (41) et le second positionneur (51), sont agencés de manière à pouvoir être couplés de telle façon qu'un déplacement d'ajustage du premier positionneur (41) est arrêté par une butée de couplage contre le second positionneur (51) placé dans une de ses positions d'ajustage de déclenchement fixes (EP1, EP2), et provoque ainsi une position de déclenchement mentionnée (TP1, TP2) de l'élément de butée de tête de poisson (3) associée à la position d'ajustage de déclenchement fixe définie (EP1, EP2) du second positionneur (51).

2. Dispositif d'abattage de poisson selon la revendication 1, **caractérisé en ce que** le dispositif de positionnement de poisson (13) comprend au moins une paire (8) de clapets de flanc (81) destinés à centrer le poisson (100) dans la position d'arrêt temporaire, qui limitent latéralement l'espace de réception de poisson (11), et **en ce que** les deux clapets de flanc (81) peuvent être actionnés par une force de compression dépendant de la taille de poisson du poisson dans une position de base définie, dans laquelle chaque poisson arrive entre les deux clapets de flanc (81), de sorte que le poisson repousse les deux clapets de flanc (81) à rencontre de la force de compression en fonction de la taille du poisson.

3. Dispositif d'abattage de poisson selon la revendication 1 ou 2, **caractérisé en ce qu'**il comprend un dispositif de détection de taille de poisson (15) détectant la taille du poisson pour générer des signaux de commande en fonction de la taille du poisson.

4. Dispositif d'abattage de poisson selon la revendication 3, **caractérisé en ce qu'**il comprend un dispositif de commande de dispositif (16) qui est relié au moins au dispositif de détection de taille de poisson (15), aux actionneurs-positionneurs (4, 5) commandables du dispositif de déclenchement (2), au dispositif capteur de déclenchement (9), audit au moins un outil d'abattage de poisson (12) commandable et au moyen d'évacuation commandable pour commander le fonctionnement en fonction de la taille du poisson.

5. Dispositif d'abattage de poisson selon l'une quelconque des revendications 1 à 4, **caractérisé en ce que** le dispositif d'abattage de poisson (1) présente un boîtier stationnaire (10), un châssis (21) formant un cadre de montage du dispositif de déclenchement (2) et un dispositif de blocage (7) avec lequel le châssis (21) peut être bloqué de manière fixe et ajustable pour prérégler une distance d'ajustage de l'élément de butée de tête de poisson (3) depuis l'entrée d'espace de réception (111) au niveau du boîtier (10).

6. Dispositif d'abattage de poisson selon l'une quelconque des revendications 1 à 5, **caractérisé en ce qu'**un siège coulissant avec un dispositif de blocage (7) est conçu entre une partie de boîtier du dispositif d'abattage de poisson (1) et un châssis (21) du dispositif de déclenchement (2), dans lequel le châssis (21) du dispositif de déclenchement (2) peut être fixé de manière ajustable pour prérégler une distance d'ajustage de l'élément de butée de tête de poisson (3) depuis l'entrée d'espace de réception (111) de l'espace de réception de poisson (11) au niveau de la partie de boîtier du dispositif d'abattage de poisson (1).

7. Dispositif de déclenchement (2), configuré pour un dispositif d'abattage de poisson avec au moins un outil d'abattage de poisson (12) destiné à agir sur une tête de poisson pour abattre le poisson (100), en particulier pour un dispositif d'abattage de poisson (1) selon l'une quelconque des revendications 1 à 6, comprenant un châssis (21), un élément de butée de tête de poisson (3) monté sur le châssis (21), qui est configuré pour venir en butée contre la tête de poisson d'un poisson qu'il s'agit d'abattre et qui forme un élément de déclenchement (22) actionnable via la butée de la tête de poisson, ledit élément de déclenchement pouvant être relié à un contrôleur destiné à actionner un outil d'abattage de poisson (12), un premier actionneur-positionneur (4) commandable agencé au niveau du châssis (21) avec un premier positionneur (41), ainsi qu'un moyen de couplage (6), monté de manière mobile et coulissante au niveau du châssis (21), qui monte de manière coulissante l'élément de butée de tête de poisson (3) au niveau du châssis (21) et le relie au premier positionneur (41) du premier actionneur-positionneur (4) pour ainsi déplacer et positionner de manière commandable l'élément de butée de tête de poisson (3) en fonction de la taille du poisson, **caractérisé en ce que** le dispositif de déclenchement (2) comprend un second actionneur-positionneur (5) commandable, agencé au niveau du châssis (21), configuré pour ajuster en fonction de la taille du poisson au moins deux positions de déclenchement (TP1, TP2) avec un second positionneur (51), dans lequel le second positionneur (51) peut être placé de manière commandable dans au moins deux positions d'ajustage de déclenchement fixes (EP1, EP2) du second positionneur, et **en ce que** les deux positionneurs (41, 51), à savoir le premier positionneur (41) et le second positionneur (51), sont agencés de manière à pouvoir être couplés de telle façon qu'un déplacement d'ajustage du premier positionneur (41) est arrêté par une butée de couplage contre le second positionneur (51) placé dans une de ses positions d'ajustage de déclenchement fixes (EP1, EP2), et provoque ainsi une position de déclenchement mentionnée (TP1, TP2) de l'élément de butée de tête de poisson (3) associée à la position d'ajustage de déclenchement fixe placée (EP1, EP2) du second positionneur (51).

8. Dispositif de déclenchement selon la revendication 7, **caractérisé en ce que** le premier positionneur (41) du premier actionneur-positionneur (4) peut être déplacé avec un décalage de positionnement maximum dans une position d'ajustage de positionnement de déclenchement fixe (EP3) du premier positionneur (41), qui est déterminée par un décalage de positionnement maximum du premier positionneur (41) et provoque en correspondance une position de déclenchement (TP3) de l'élément de butée de tête de poisson (3), et **en ce que** d'autres positions de déclenchement (TP1, TP2) de l'élément de butée de tête de poisson (3) sont déterminées par les positions d'ajustage de déclenchement fixes (EP1, EP2) du second positionneur (51).

9. Dispositif de déclenchement selon la revendication 7 ou 8, **caractérisé en ce que** le second positionneur (51) peut être placé de manière bistable uniquement dans deux positions d'ajustage de déclenchement fixes (EP1, EP2) du second actionneur-positionneur (5), qui déterminent deux positions de déclenchement associées (TP1, TP2) de l'élément de butée de tête de poisson (3).

10. Dispositif de déclenchement selon l'une quelconque des revendications 7 à 9, **caractérisé en ce que** le châssis (21) présente un côté avant de châssis (216) et une section de châssis avant (217) ainsi qu'un côté arrière de châssis (218) et une section de châssis arrière (219), dans lequel l'élément de butée de tête de poisson (3) est agencé dans la section de châssis avant avec une surface de butée de tête de poisson (31) libre au niveau du côté avant de châssis pour venir en butée contre la tête de poisson.

11. Dispositif de déclenchement selon la revendication 10, **caractérisé en ce que** l'élément de butée de tête de poisson (3) peut être décalé dans une position de déclenchement arrière (TP3) éloignée du côté avant de châssis (216), dans lequel au moins une des positions de déclenchement (TP1, TP2) associées au second actionneur-positionneur (5) est espacée depuis la position de déclenchement arrière (TP3) jusqu'au côté avant de châssis (216).

12. Dispositif de déclenchement selon la revendication 11, **caractérisé en ce que**, en association avec les positions d'ajustage de déclenchement fixes (EP1, EP2, EP3), une position de déclenchement avant (TP1) pour la butée de têtes de poissons de petite taille, au moins une position de déclenchement intermédiaire (TP2) entre les positions de déclenchement avant et arrière (TP3) pour la butée de têtes de poissons de taille moyenne, et la position de déclenchement arrière (TP3) pour la butée de têtes de poissons de grande taille peuvent être ajustées.

13. Dispositif de déclenchement selon l'une quelconque des revendications 7 à 12, **caractérisé en ce que** le moyen de couplage (6) présente une barre de couplage (61) montée de manière mobile et coulissante au niveau du châssis (21), un premier élément de couplage (62) raccordant la barre de couplage (61) au premier positionneur (41) et un second élément de couplage (63) fixé au niveau de la barre de couplage (61), qui crée la butée de couplage contre le second positionneur (51), quand il se trouve dans une des positions d'ajustage de déclenchement fixes (EP1, EP2) ajustables.

14. Dispositif de déclenchement selon l'une quelconque des revendications 7 à 13, **caractérisé en ce que** les deux actionneurs positionneurs (4, 5), à savoir le premier actionneur-positionneur (4) et le second actionneur-positionneur (5), sont agencés côte à côte en parallèle au niveau du châssis (21), dans lequel les deux positionneurs (41, 51) s'étendent au niveau d'une section de châssis arrière (219), et **en ce qu'**au moins une partie du moyen de couplage (6) est agencée en parallèle à côté des deux actionneurs-positionneurs (4, 5).

15. Dispositif de déclenchement selon l'une quelconque des revendications 7 à 14, **caractérisé en ce que**, au niveau du moyen de couplage (6) du dispositif de déclenchement (2), un dispositif capteur de déclenchement (9) destiné à identifier la butée d'une tête de poisson contre l'élément de butée de tête de poisson (3) est agencé de manière à pouvoir être décalé avec l'élément de butée de tête de poisson (3), dans lequel l'élément de butée de tête de poisson (3) fait partie du dispositif capteur (9).

16. Dispositif de déclenchement selon l'une quelconque des revendications 7 à 15, **caractérisé en ce que** l'élément de butée de tête de poisson (3) destiné à détecter la butée d'une tête de poisson contre l'élément de butée de tête de poisson (3), qui peut s'échapper de manière restreinte à rencontre d'une force de rappel, est monté au niveau du moyen de couplage (6).

17. Dispositif de déclenchement selon l'une quelconque des revendications 7 à 16, **caractérisé en ce qu'**une distance (d) peut être ajustée entre le second positionneur (51) et un élément de couplage (63) du moyen de couplage (6) auquel les deux positionneurs (41, 51) peuvent être couplés.
